# EUROPEAN PATENT APPLICATION

(11) **EP 1 768 372 A1**
(43) Date of publication of application: **28.03.2007**
(21) Application number: 05741593.7
(22) Date of filing: 19.05.2005
(51) Int. Cl.: H04N 1/00

(54) **IMAGE FORMING DEVICE**

(30) Priority: 20.05.2004 JP 2004150917
(71) Applicant: SHARP KABUSHIKI KAISHA, Osaka-shi, Osaka 545-8522 (JP)
(72) Inventor: MIYAKE, Hideyuki, Soraku-gun Kyoto 619-0224 (JP); NISHIJIMA, Mitsuo, Nara-shi, Nara 630-8286 (JP); HIRAOKA, Jun, Shik i-gun Nara 636-0312 (JP); SHIRAISHI, Kenichi, Nara-shi, Nara 631-0076 (JP); KANECHIKA, Kenji, Tenri-shi, Nara (JP)
(74) Representative: Müller - Hoffmann & Partner
(86) International application number: PCT/JP2005/009181
(87) International publication number: WO 2005/114976

(57) **Abstract**

An object of the invention is to provide an image forming apparatus which is small in size and can be assembled in a shorter time. The image forming apparatus includes a support section for supporting a carriage (66) and a common frame (21) including a support section for supporting an image sensor (68). The common frame (21) is realized by integral molding with resin, whereby it is possible to form the common frame in one process, compared with when a frame for the carriage (66) and a frame for the image sensor (68) are individually formed. Further, using the common frame (21) eliminates need to assemble frames with different functions into one piece. As a result, the common frame can be formed at low cost and in a small size, and time spent for assemble of the image forming apparatus can be shortened.

## Description

### Technical Field

The present invention relates to an image forming apparatus that forms an image on a recording sheet by moving a movable recording unit in a crossing direction crossing a direction of conveyance of the recording sheet while conveying the recording sheet, and that reads an image formed on an original sheet while conveying the original sheet, and relates to, for example, a facsimile apparatus.

### Background Art

A serial-type image forming apparatus having a scanner function is, for example, an inject-type facsimile apparatus (for example, refer to Japanese Unexamined Patent Publication JP-A 2001-103213). The inkjet-type facsimile apparatus forms an image on a recording sheet by moving a recording head in a crossing direction crossing a direction of conveyance of the recording sheet while conveying the recording sheet. Moreover, the facsimile apparatus reads an image formed on an original sheet while conveying the original sheet. The facsimile apparatus disclosed in JP-A 2001-103213 is configured so that a reading portion reading an image is removable from a facsimile apparatus main body.

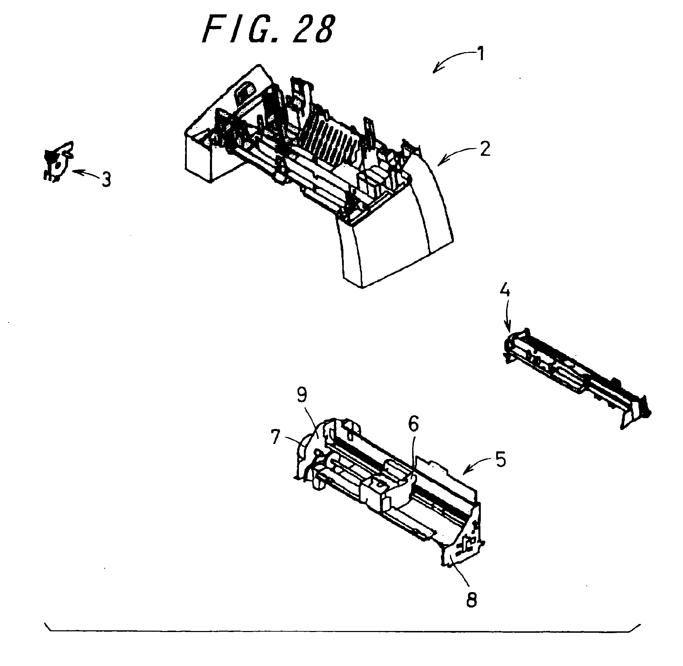

Fig. 28 is an exploded perspective view illustrating a facsimile apparatus 1 of another related art. The facsimile apparatus 1 of the other related art has an image reading unit 2, a reading driving frame 3, an automatic sheet feeder unit 4 (referred to as an ASF unit 4 hereafter), and an image forming unit 5. The units 2, 4, 5 and the frame 3 described above are assembled into one piece, thereby forming part of the facsimile apparatus 1.

The reading driving frame 3 supports a reading driving motor, and is fixed to the image reading unit 2. The image reading unit 2 has an image sensor that reads an image formed on an original sheet, and an original sheet conveying portion that conveys an original sheet. The original sheet conveying portion is given power by the reading driving motor, thereby conveying original sheets to the image sensor one by one. Moreover, the original sheet conveying portion conveys an original sheet from which an image has been read by the image sensor to an ejecting position.

The ASF unit 4 conveys recording sheets placed on a recording sheet placing portion to the image forming unit 5 one by one. The image forming unit 5 has a recording sheet conveying portion that conveys a recording sheet in a conveying direction, and a cartridge driving portion 7 that displaces and moves carriage 6 in a crossing direction crossing the conveying direction. The carriage 6 is equipped with a recording head that emits ink.

The facsimile apparatus 1 controls jet-out timing to jet out ink from the recording head, a moving operation of a recording sheet in the conveying direction, and a moving operation of the carriage 6 in the crossing direction. Consequently, it is possible to form an image on a recording sheet. The image forming unit 5 conveys a recording sheet on which an image has been formed to an ejecting position.

The image reading unit 2, the ASF unit 4, the image forming unit 5 and the reading driving frame 3 are molded and processed into separate bodies, respectively, and the units 2, 4, 5 and the frame 3 are assembled into one piece, thereby forming part of the facsimile apparatus 1. Such a facsimile apparatus 1 requires rigidity of a frame of the image forming unit 5 in order to increase the quality of an image. Therefore, of the frame of the image forming unit 5, a pair of side wall portions 8 and 9 formed on both sides in the crossing direction are constructed of plate members made of metal. Such a construction is true of an image forming apparatus other than the facsimile apparatus.

As described above, in the image forming apparatus of the related art, the image reading unit 2 and the image forming unit 5 are formed into separate bodies. Therefore, in order to configure the image forming apparatus, there is a need to assemble the units formed individually, with the result that there is a problem such that the image forming apparatus becomes large in size. Moreover, since the units are formed individually, there is a problem such that it is impossible to form at a low cost and it is necessary to spend a lot of time to assemble.

### Disclosure of Invention

Accordingly, an object of the invention is to provide a serial-type image forming apparatus capable of reading an image, which is small in size, can be assembled in a shorter time and can be produced at a low cost.

The invention provides an image forming apparatus that forms an image on a recording sheet by moving a movable recording unit in a crossing direction crossing a direction of conveyance of the recording sheet while conveying the recording sheet, and that reads an image formed on an original sheet by a reading unit while conveying the original sheet,
the image forming apparatus comprising:
a common frame that includes a recording component supporting frame portion that supports a recording component for recording an image on a recording sheet, and a reading component that supports a reading component for reading an image formed on an original sheet,
wherein the common frame is realized by integral molding with resin.

According to the invention, the recording component supporting frame portion and the reading component supporting frame portion are integrally molded, whereby it is possible to form a frame in one process, compared with when a frame for image recording and a frame for image reading are individually formed. Moreover, using the common frame eliminates need to assemble frames with different functions into one piece.

Further, in the invention, it is preferable that the common frame has a pair of side wall portions formed on both sides in the crossing direction, and a plurality of connecting portions that connect the pair of side wall portions and extend in the crossing direction, and
the connecting portion includes a sheet guide that guides at least one of a recording sheet and an original sheet at the time of conveyance of a sheet.

According to the invention, the pair of side wall portions are connected by the plurality of connecting portions, whereby it is possible to form the common frame into a lattice frame shape, and it is possible to increase the rigidity of the common frame. Moreover, since the sheet guide also serves as the connecting portion, there is no need to additionally dispose a connecting portion that connects the pair of side wall portions, and it is possible to prevent the image forming apparatus from becoming larger in size. Besides, a fixing process for fixing the sheet guide to the common frame is unnecessary.

Furthermore, in the invention, it is preferable that the image forming apparatus further comprises:
recording sheet conveying means for conveying a recording sheet;
a recording sheet conveying driving source for conveying a recording sheet;
a recording sheet transmission mechanism that transmits power from the recording sheet conveying driving source to the recording sheet conveying means;
original sheet conveying means for conveying an original sheet;
an original sheet conveying driving source for conveying an original sheet; and
an original sheet transmission mechanism that transmits power from the original sheet conveying driving source to the original sheet conveying means,
wherein the recording sheet conveying means, the recording sheet conveying driving source, the recording sheet transmission mechanism, the original sheet conveying means, the original sheet conveying driving source and the original sheet transmission mechanism are supported by the common frame.

According to the invention, the respective conveying means, the respective conveying driving sources and the respective transmission mechanisms are supported by the common frame, whereby it is possible to place them so as to be close together with respect to the common frame. Consequently, it is possible to make the common frame small in size. Moreover, for example, by sharing at least part of the conveying means, the conveying driving sources and the transmission means, respectively, it is possible to further downsize the image forming apparatus.

Still further, in the invention, it is preferable that the recording sheet conveying driving source and the original sheet conveying driving source are realized by a single common sheet conveying driving source.

According to the invention, the respective conveying means and the respective transmission means are provided on the common frame as described above, so that it is possible to easily drive the recording sheet conveying means and the original sheet conveying means by the single common sheet conveying driving source.

Still further, in the invention, it is preferable that a torque necessary for the common sheet conveying driving source is set so as to become as small as possible while the required accuracy of conveyance is maintained.

According to the invention, a torque necessary for the common sheet conveying driving source is set so as to become small, whereby it is possible to suppress the amount of heat generated from the common sheet conveying driving source. Consequently, it is possible to prevent that a temperature in an area around the common sheet conveying driving source becomes high.

Still further, in the invention, it is preferable that the image forming apparatus further comprises switching means for, in one of recording sheet conveyance state and original sheet conveyance state, preventing transmission of power to the conveying means used for the other sheet conveyance.

According to the invention, in one of recording sheet conveyance state and original sheet conveyance state, transmission of power to the conveying means used for the other sheet conveyance is prevented, whereby it is possible to make a torque necessary for the common sheet conveying driving source small. For example, by preventing transmission of power to the original sheet conveying means when conveying a recording sheet, it is possible to convey the recording sheet at a small load. Consequently, it is possible to suppress the amount of heat generated from the common sheet conveying driving source.

Still further, in the invention, it is preferable that the switching means operates in connection with displacement and movement of the movable recording unit.

According to the invention, the switching means switches a transmission state of power given from the common sheet driving source to the conveying means in connection with displacement and movement of the movable recording unit. Consequently, it is unnecessary to additionally dispose a power source for switching the power transmission state, and it is possible to switch the power transmission state of the driving source with a simple configuration.

Still further, in the invention, it is preferable that the switching means prevents transmission of power to the original sheet conveying means from the common sheet conveying driving source when the movable recording unit has moved to an image forming position to perform image formation, and allows transmission of power to the original sheet conveying means from the common sheet conveying driving source when the movable recording unit has moved to a standby position to stand by when image formation is not performed.

According to the invention, when the movable recording unit has moved to the image forming position to perform image formation, transmission of power to the original sheet conveying means from the common sheet conveying driving source is prevented, with the result that the original sheet conveying means is not driven when an image is formed on a recording sheet, and it is possible to decrease a torque necessary for the common sheet conveying driving source.

Still further, in the invention, it is preferable that the original sheet transmittingmeans includes a sun gear rotated by power given from the common sheet conveying driving source, a planet gear formed so as to mesh with the sun gear and make an angular displacement in a perimeter direction of the sun gear, and a revolving arm member that supports the planet gear so as to make an angular displacement in the perimeter direction of the sun gear,
the original sheet conveying means includes a meshing gear capable of meshing with the planet gear having been displaced to a predetermined meshing position, and an original sheet conveying roller that rotates in accordance with rotation of the meshing gear and conveys an original sheet, and
the switching means has a switching member that, when the movable recording unit has moved to the standby position, is displaced by the movable recording unit to displace the planet gear to the meshing position, and that, when the movable recording unit has moved to a not standby position, is displaced by the movable recording unit to displace the planet gear to a not meshing position.

According to the invention, when the movable recording unit is placed in the standby position, the recording mobile body displaces the switching member, thereby making the switching member capable of displacing the planet gear to the meshing position. Then, when the sun gear rotates, the planet gear rotates and revolves, thereby being displaced to the meshing position and meshing with the meshing gear. Consequently, it is possible to transmit power from the sun gear to the original sheet conveying roller via the meshing gear.

Moreover, when the movable recording unit is placed in the not standby position, the movable recording unit displaces the switching member, thereby causing the switching member to displace the planet gear to the not meshing position. Then, a meshing state of the planet gear with the meshing gear is released. Consequently, it is possible to prevent transmission of power from the sun gear to the original sheet conveying roller.

Still further, in the invention, it is preferable that the image forming apparatus further comprising two or more metal guiding bodies that extend from the one side wall portion to the other side wall portion of the common frame and guide the movable recording unit in the crossing direction.

According to the invention, the movable recording unit is guided in the crossing direction by the plurality of metal guide bodies, whereby it is possible to maintain a uniform interval between the movable recording unit installed in the movable recording unit and a recording sheet. In a case where one metal guiding body, for example, one metal guiding shaft is disposed, the movable recording unit may make an angular displacement around the metal guiding shaft. However, by disposing the plurality of metal guiding bodies, it is possible to reduce an angular displacement of the movable recording unit, and accurately maintain a uniform interval between the movable recording unit and a recording sheet. For example, other than the metal guiding shaft, the metal guiding member may be formed into a plate shape, or may be formed into a shaft shape.

Moreover, by guiding the movable recording unit by such a plurality of metal guiding shafts, it is possible to cause the movable recording unit to accurately move in the crossing direction even if the common frame molded with resin is deformed by heat and external force, and it is possible to prevent decrease of the quality of a recorded image.

Still further, in the invention, it is preferable that the image forming apparatus is a facsimile apparatus.

According to the invention, the image forming apparatus is a facsimile apparatus. The facsimile apparatus comprises components necessary for a facsimile apparatus, such as communication control means for executing communication control and a dial operating portion with which the operator inputs a dial operation, in addition to the functions that perform image reading and image formation. In the invention, it is possible to downsize the portions performing image reading and image formation by using the common frame as described above, and it is possible to downsize the facsimile apparatus as a whole even if the communication control means, the dial operating portion and so on are disposed.

Moreover, in the case of formation of an image presented by image data acquired via a communication line onto a recording sheet, there is a case where the quality of the image presented by the image data sent from the sender is low due to problems of a transmission speed, the amount of transmitted data and so on. In such a case, as the common frame is used, it is possible to form the image presented by the image data sent from the sender of required image quality, as well as it is possible to downsize and form at a low cost.

### Brief Description of Drawings

Other and further objects, features, and advantages of the invention will be more explicit from the following detailed description taken with reference to the drawings wherein:
Fig. 1 is an exploded perspective view illustrating a facsimile apparatus 20 according to a first embodiment of the invention while omitting partly;
Fig. 2 is a perspective view illustrating a state where components illustrated in Fig. 1 are assembled;
Fig. 3 is a magnified perspective view illustrating a common frame;
Fig. 4 is an exploded perspective view abstractly illustrating the facsimile apparatus 20;
Fig. 5 is a perspective view illustrating an external appearance of the facsimile apparatus 20;
Fig. 6 is a block diagram illustrating a configuration of the facsimile apparatus 20;
Fig. 7 is a view for describing a sheet conveying path of the facsimile apparatus 20;
Fig. 8 is a block diagram illustrating an electrical configuration of an image recording portion 50 and an image reading portion 51;
Fig. 9 is a perspective view illustrating power transmission mechanisms 80, 90 and 110;
Fig. 10 is a plan view of the facsimile apparatus 20 illustrating a configuration for conveying a recording sheet of the image recording portion 50 in a simplified manner;
Fig. 11 is a plan view of the facsimile apparatus 20 illustrating a configuration for driving to displace a carriage 66 of the image recording portion 50 in a simplified manner;
Fig. 12 is a perspective view illustrating a state where the carriage 66 is supported;
Fig. 13 is a plan view of the facsimile apparatus 20 illustrating a configuration for conveying an original sheet of the image reading portion 51 in a simplified manner;
Figs. 14A and 14B are side views illustrating switching means that switches between a recording operation and a reading operation, in a simplified manner;
Figs. 15A and 15B are side views taken on line S15-S15 of Figs. 14A and 14B;
Fig. 16 is a side view for describing a sheet conveying operation when a recording sheet is fed;
Fig. 17 is a side view for describing a sheet conveying operation when an image is formed on a recording sheet;
Fig. 18 is a side view for describing a sheet conveying operation when an image of an original sheet is read;
Fig. 19 is a flowchart illustrating an image forming operation of a main control portion 47;
Fig. 20 is a flowchart illustrating an image reading operation of the main control portion 47;
Fig. 21 is a side view illustrating part of a facsimile apparatus according to a second embodiment of the invention, for describing a sheet conveying operation when an image is formed on a recording sheet;
Fig. 22 is a side view illustrating part of the facsimile apparatus according to the second embodiment of the invention, for describing a sheet conveying operation when an original is conveyed;
Fig. 23 is a plan view illustrating part of the facsimile apparatus according to the second embodiment of the invention, and illustrating a switching member 130;
Fig. 24 is a partly magnified plan view illustrating the switching member 130;
Fig. 25 is a perspective view illustrating part of a facsimile apparatus according to a third embodiment of the invention;
Figs. 26A and 26B are plan views illustrating a bent piece 200 in a simplified manner;
Figs. 27A and 27B are side views taken on line S27-S27 of Figs. 26A and 26B; and
Fig. 28 is an exploded perspective view illustrating the facsimile apparatus 1 of the other related art.

### Best Mode for Carrying out the Invention

Now referring to the drawings, preferred embodiments of the invention are described below.

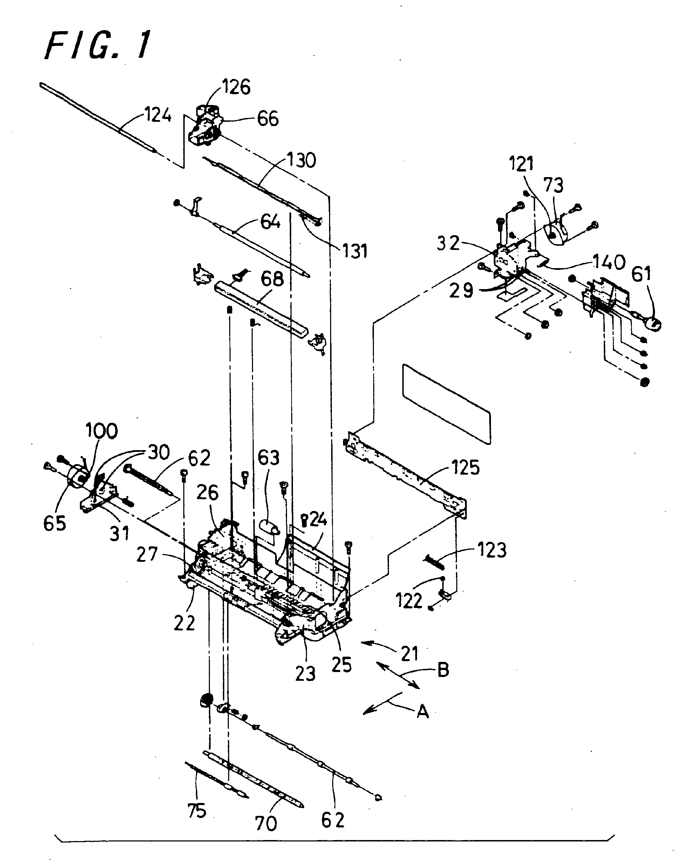

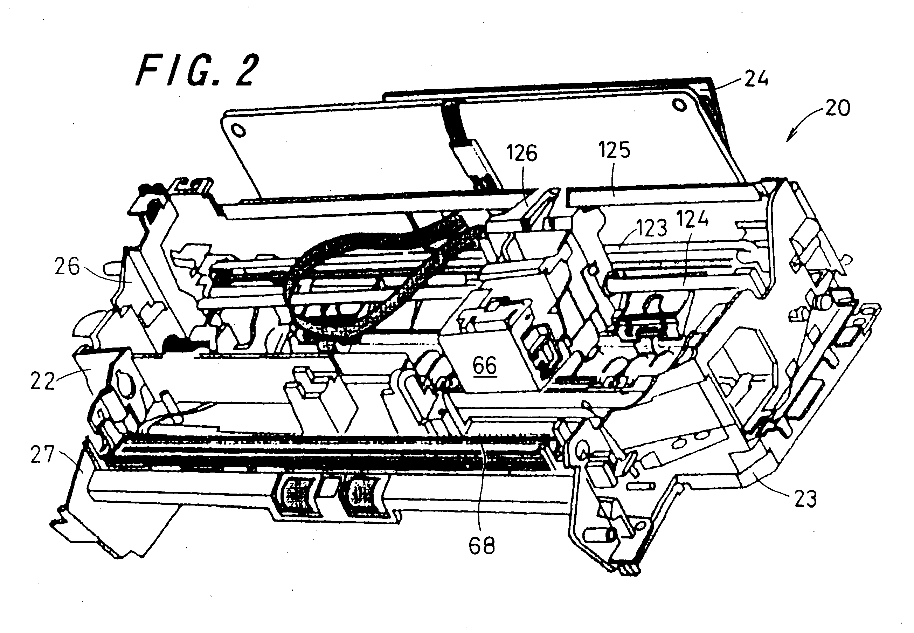

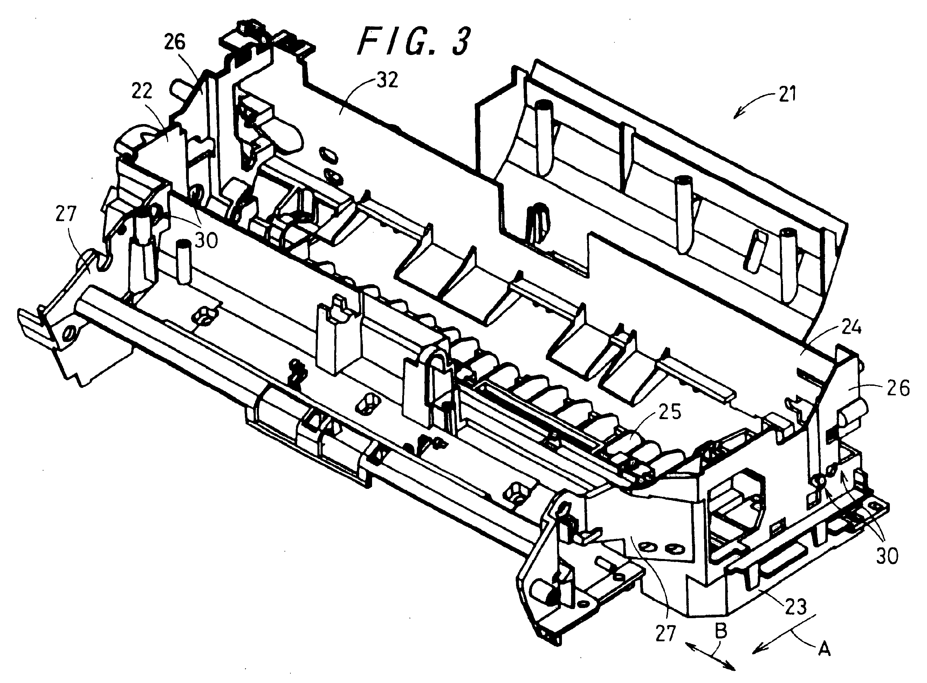

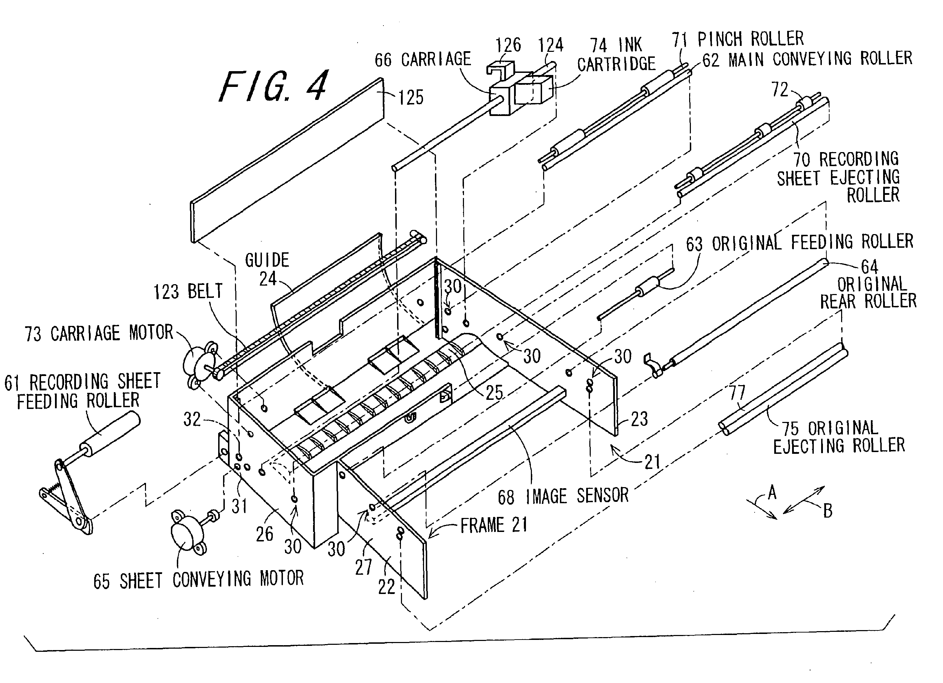

Fig. 1 is an exploded perspective view illustrating a facsimile apparatus 20 according to a first embodiment of the invention while omitting partly. Fig. 2 is a perspective view illustrating a state where components illustrated in Fig. 1 are assembled. Fig. 3 is a magnified perspective view illustrating a common frame 21, and Fig. 4 is an exploded perspective view abstractly illustrating the facsimile apparatus 20.

The facsimile apparatus 20 is configured so as to be connected to a public network, for example, a telephone line, and be capable of communicating with another facsimile apparatus connected to the telephone line. The facsimile apparatus 20 is capable of reading an image formed on an original sheet and sending the read image in image data form to the other facsimile apparatus via the telephone line. Moreover, the facsimile apparatus 20 is capable of receiving image data sent from the other facsimile apparatus and forming the received image data in image form onto a recording sheet.

In the invention, an "original sheet" means a sheet from which an image is read by the facsimile apparatus 20. A "recording sheet" means a sheet on which an image is formed by the facsimile apparatus 20. Both the original sheet and the recording sheet may be referred to as a "sheet."

The facsimile apparatus 20 has a common frame 21 that supports a recording component for recording an image on a recording sheet and supports a reading component for reading an image. The common frame 21 is held in a casing of the facsimile apparatus 20, and is formed by integral molding with synthetic resin.

The common frame 21 includes a recording component supporting frame portion 26 and a reading component supporting frame portion 27. In the present embodiment, the recording component supporting frame portion 26 is disposed upstream in a sheet conveying direction and downward, compared with the reading component supporting frame portion 27.

The recording component supporting frame portion 26 supports recording components for recording an image on a recording sheet. The recording components include a recording sheet feeding roller 61 that conveys a recording sheet, a main conveying roller 62, a recording sheet ejecting roller 70, and a carriage 66 that is equipped with an ink cartridge 74 for forming an image on a recording sheet and serves as a movable recording unit.

The reading component supporting frame portion 27 supports reading components for reading an image formed on an original sheet. The reading components include an original sheet feeding roller 63 that conveys an original sheet, an original rear roller 64, an original sheet ejecting roller 75, and an image sensor 68 that serves as a reading unit for reading an image formed on an original sheet.

At the time of image formation and image reading, the facsimile apparatus 20 conveys a recording sheet and an original sheet in almost the same directions. On the common frame 21, a sheet conveying direction A and a crossing direction B crossing the sheet conveying direction A are set. The sheet conveying direction A is a direction in which a recoding sheet and an original sheet are conveyed. The crossing direction B is a direction that extends along a sheet surface of a conveyed sheet and extends in perpendicular to the sheet conveying direction A. The common frame 21 rotatably supports the respective rollers for conveying sheets. Axes of the respective rollers extend in the crossing direction B. Moreover, the common frame 21 supports the carriage 66 so as to be freely displaced in the crossing direction B.

Thus, the facsimile apparatus 20 of the present embodiment is configured in a manner that the frame portion 26 for forming an image and the frame portion 27 for reading an image are integrated. Moreover, as described later, a portion for forming an image and a portion for reading an original are partly shared. Consequently, it is possible to make the apparatus small and simplify the configuration, and it is possible to produce at a low cost.

The common frame 21 has a pair of side wall portions 22 and 23 formed on both sides in the crossing direction B, and connecting portions 24 and 25 that connect the pair of side wall portions 22 and 23 and extend in the crossing direction B. The pair of side wall portions 22 and 23 rotatably support the recording sheet feeding roller 61, the main conveying roller 62 and the recording sheet ejecting roller 70. The recording sheet feeding roller 61, the main conveying roller 62 and the recording sheet ejecting roller 70 compose recoding sheet conveying means for conveying a recording sheet.

Moreover, the pair of side wall portions 22 and 23 rotatably support the original sheet feeding roller 63, the original rear roller 64 and the original sheet ejecting roller 75. The original sheet feeding roller 63, the original rear roller 64 and the original sheet ejecting roller 75 compose original sheet conveying means for conveying an original sheet. In concrete, both ends of each of the rollers 61, 62, 70, 63, 64 and 75 are fitted into fitting portions 30 formed on the pair of side wall portions 22 and 23, whereby the respective rollers 61, 62, 70, 63, 64 and 75 are rotatably supported.

Further, the common frame 21 is provided with a first motor supporting portion 31 and a second motor supporting portion 32. The first motor supporting portion 31 supports a sheet conveying motor 65. The first motor supporting portion 31 is disposed to the one side wall portion 22 of the pair of side wall portions 22 and 23. For example, the sheet conveying motor 65 is supported on the common frame 21 directly or indirectly. In the present embodiment, as illustrated in Fig. 1, the first motor supporting portion 31 is formed into a separate body from the common frame 21. The sheet conveying motor 65 serves as a sheet conveying driving source for conveying a recording sheet and an original sheet.

The secondmotor supporting portion 32 supports a carriage motor 73. The second motor supporting portion 32 is disposed to the connecting portion 24 on the upstream side in the conveying direction A. In the present embodiment, as illustrated in Fig. 1, the carriage motor 73 is formed into a separate body from the common frame 21, and supported on the common frame 21 via a guiding plate member 125 described later. The carriage motor 73 serves as a carriage conveying driving source for driving to displace the carriage 66.

Further, the common frame 21 supports a sheet conveying transmission mechanism that transmits power of the sheet conveying motor 65 to the respective rollers 61, 62, 70, 63, 64 and 75. In the present embodiment, the common frame 21 supports the sheet conveying transmission mechanism at the one side wall portion 22. Moreover, the common frame 21 supports a carriage conveying transmission mechanism that transmits power of the carriage motor 73 to the carriage 66. In the present embodiment, the common frame 21 supports the carriage conveying transmission mechanism at the pair of side wall portions 22, 23 and the connecting portion 24 on the upstream side in the conveying direction.

In the present embodiment, of the sheet conveying transmission mechanism, recording sheet power transmitting means for transmitting power from the sheet conveying motor 65 to the respective rollers 61, 62 and 70 for image recording is realized by a gear transmissionmechanism. In the same manner, original sheet power transmitting means for transmitting power from the sheet conveying motor 65 to the respective rollers 63, 64 and 75 for image reading is realized by a gear transmission mechanism. A carriage power transmission mechanism that transmits power from the carriage motor 73 to the carriage 66 is realized by a belt transmission mechanism.

Each of the connecting portions 24 and 25 of the common frame includes a sheet guiding portion that guides at least one of a recording sheet and an original sheet in the conveying direction A. In the present embodiment, part of the one connecting portion 24 of the two connecting portions serves as a guide that guides a recoding sheet on which an image has not been formed toward the recording sheet feeding roller 61. Moreover, part of the other connecting portion 25 of the two connecting portions serves as a guide that guides a recoding sheet fed from the recording sheet feeding roller 61 toward the main conveying roller 62.

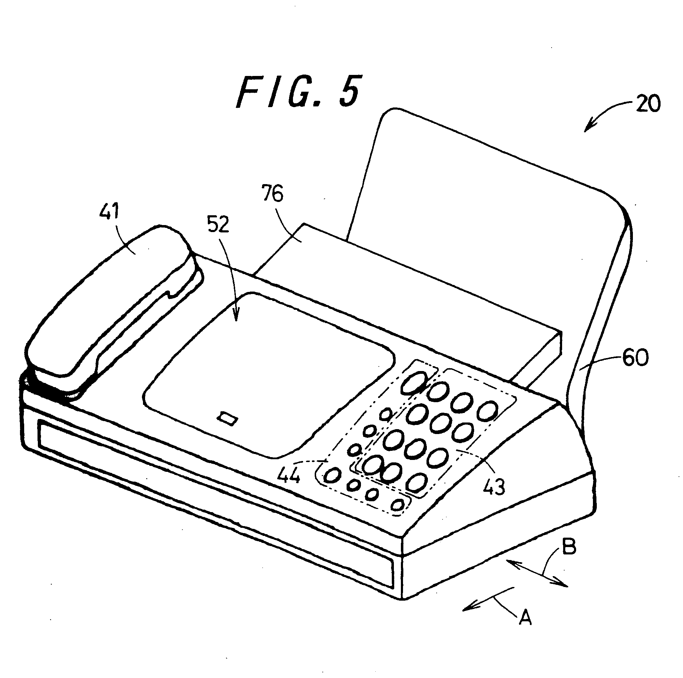

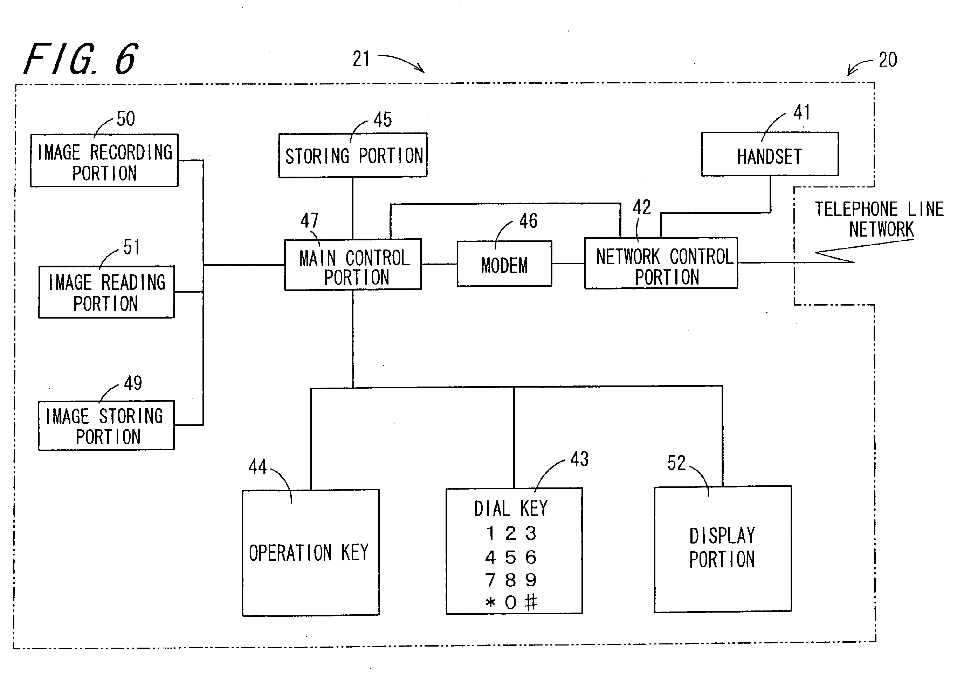

Fig. 5 is a perspective view illustrating an external appearance of the facsimile apparatus 20. Fig. 6 is a block diagram illustrating the facsimile apparatus 20. The facsimile apparatus 20 comprises a handset 41, a network control portion 42, a dial key 43, an operation key 44, a storing portion 45, a modem 46, a main control portion 47, an image storing portion 49, an image recording portion 50, and an image reading portion 51.

The facsimile apparatus 20 of the present embodiment has a telephone function. The network control portion 42 sends and receives communication data compliant with a predetermined communications protocol, and brings the apparatus to a state of being capable of performing data transmission with a telephone of the communicating partner or a facsimile apparatus of the communicating partner via a public network or the like.

Moreover, the network control portion 42 gives voice data sent from the telephone of the communicating partner to the handset 41, and also sends voice data given from the handset 41 to the telephone of the communicating partner. Furthermore, the network control portion 42 gives facsimile data sent from the facsimile apparatus of the communicating partner to the modem 46, and also gives facsimile data given from the modem 46 to the facsimile apparatus of the communicating partner.

The handset 41 releases voice data given from the network control portion 42 in voice form. Moreover, the handset 41 gives a voice emitted by the operator to the network control portion 42 in voice data form. The modem 46 converts facsimile data given from the network control portion 42 into image data that can be read by the main control portion 47, and gives to the main control portion 47. Moreover, the modem 46 converts image data given from the main control portion 47 into facsimile data that can be transmitted via a public network, and gives to the network control portion 42.

The dial key 43 is used when the operator inputs a number of a telephone or a facsimile apparatus of the communicating partner, and gives inputted dial information to the main control portion 47. The operation key 44 is used when the operator inputs an operation command to the facsimile apparatus 20 such as an image reading operation, an image recording operation or a displaying operation, and gives inputted operation information to the main control portion 47. For example, the dial key 43 and the operation key 44 are realized by a push button or a touch panel.

The storing portion 45 stores operation setting information, a control program and so on. The storing portion 45 gives the stored information or program to the main control portion 45 by the command of the main control portion 47. Moreover, the storing portion 45 stores information given from the main control portion 47 by the command of the main control portion 47. For example, the storing portion 45 is realized by a RAM (random access memory), a ROM (read only memory) or the like.

The main control portion 47 reads the operation setting information and the control program stored in the storing portion 45 and executes, thereby controlling the respective operations of the facsimile apparatus 20. The display portion 52 is capable of displaying a state of the facsimile apparatus 20, and displaying an image to record on a recording sheet and an image read from an original sheet. The display portion 52 displays the respective images described above by the displaying command given from the main control portion 47. For example, the display portion 52 is realized by a liquid crystal display device.

The image recording portion 50 is given an image forming operation command and data of an image to record by the main control portion 47, and records the image onto a recording sheet placed on a recording sheet placing portion 60. In the invention, "image recording" means printing of an image onto a recording sheet. The image recording portion 50 of the present embodiment records an image onto a recording sheet by the inkjet method of emitting ink toward a sheet.

The image reading portion 51 is given an image reading operation command by the main control portion 47, thereby reading an image formed on an original sheet placed on an original sheet placing portion 76 in image data form and giving the read image data to the main control portion 47. The image reading portion 51 of the present embodiment is realized so as to include a contact image sensor (CIS). The image sensor extends in the crossing direction B, and is capable of reading a portion of one line extending in the crossing direction B of an image formed on an original sheet at one time.

The image storing portion 49 is given image data to store together with a storing operation command given by the main control portion 47, thereby storing the given image data in the form of information that can be read by the main control portion. Moreover, the image storing portion 49 is given a reading operation command given from the main control portion 47, thereby giving the stored image data to the main control portion 47. In the invention, "image storing" means electrically storing image data. For example, the image storing portion 49 is realized by a RAM (random access memory).

Based on instruction information given from the dial key 43 and the operation key 44, the main control portion 47 causes the image recording portion 50 to perform an image forming operation, causes the image reading portion 51 to perform an image reading operation, and causes the network control portion 42 to perform a communication command operation. The main control portion 47 is realized by, for example, a CPU (central processing unit).

In the case of an image reading operation, based on operation information given from the operation key 44, the main control portion 47 causes the image reading portion 51 to operate so as to read an image formed on an original sheet in image data form and store the read image data into the image storing portion 49. Moreover, in the case of an image data sending operation, the main control portion gives a command to the network control portion 42 so as to access a facsimile apparatus of the communicating partner corresponding to dial information given from the dial key 43. Then, image data corresponding to the operation information of the image data stored in the image storing portion 49 is sent to the facsimile apparatus of the communicating partner.

Further, in the case of an image data receiving operation, when determining that image data is given from the network control portion 42, the main control portion gives a command to the network control portion 42 so as to access a communication apparatus of the communicating partner. Then, the image data is received from the communication apparatus of the communicating partner, and the received image data is stored into the image storing portion 49. Furthermore, in the case of an image recording operation, the main control portion 47 causes the image recording portion 50 to operate based on operation information so as to form an image presented by image data corresponding to the operation information of image data stored in the image storing portion 49, onto a recording sheet.

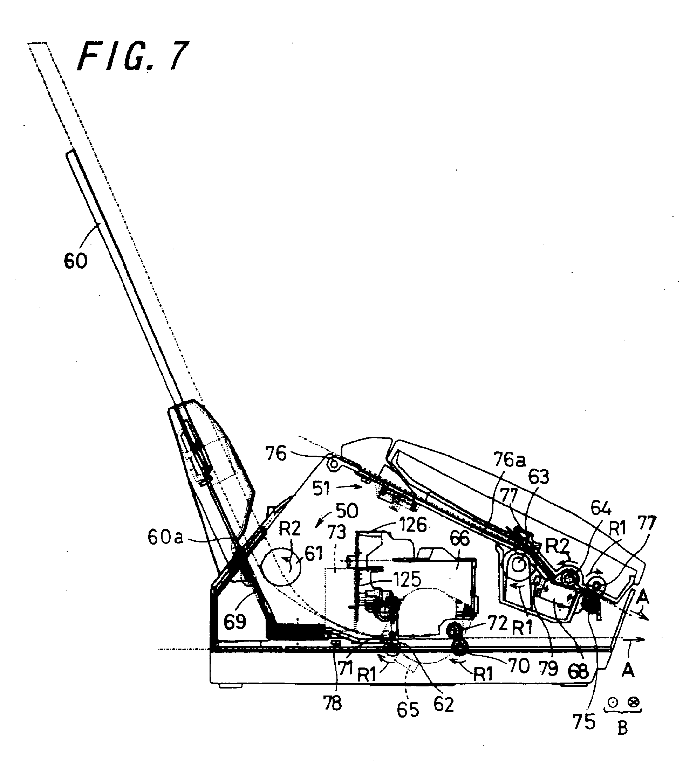

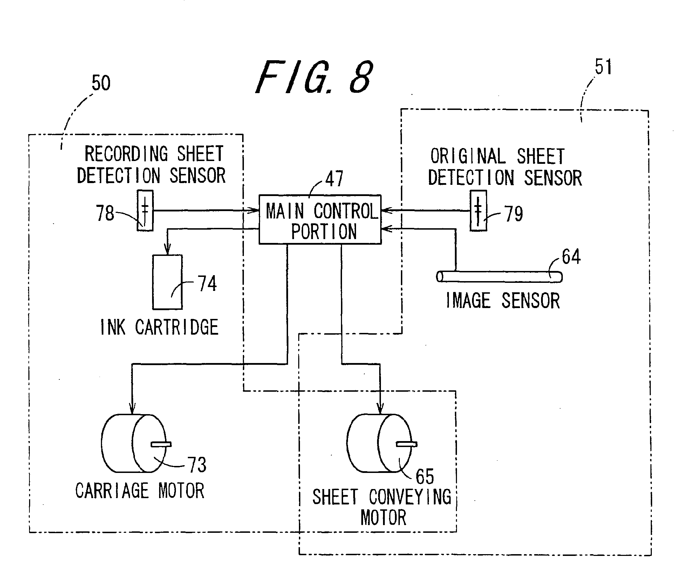

Fig. 7 is a view for describing a sheet conveying path of the facsimile apparatus 20 while partly omitting. Fig. 8 is a block diagram illustrating an electrical configuration of the image recording portion 50 and the image reading portion 51. The image recording portion 50 includes the recording sheet placing portion 60, the recording sheet feeding roller 61, a sheet separating portion 69, the main conveying roller 62, the recording sheet ejecting roller 70, the sheet conveying motor 65, the carriage motor 73, and the carriage 66.

The recording sheet placing portion 60 holds a plurality of recording sheets on which images have not been formed. The recording sheet placing portion 60 has an opening on a downstream side in the sheet conveying direction A. The sheet separating portion 69 is placed downstream in the conveying direction of an opening formed portion 60a of the recording sheet placing portion 60, and the recording sheet feeding roller 61 is placed so as to face the sheet separating portion 69. The sheet separating portion 69 and the recording sheet feeding roller 61 extend in the crossing direction B (a direction perpendicular to a sheet surface in Fig. 7). The recording sheet feeding roller 61 is pressed toward the sheet separating portion 69 by pressing means having an resilient force such as a spring or rubber.

The main conveying roller 62 is placed downstream in the sheet conveyingdirectionAof the recording sheet feeding roller 61, and extends in the crossing direction B. The recording sheet ejecting roller 70 is placed downstream in the sheet conveying direction A of the main conveying roller 62, and extends in the crossing direction B. Axes of the respective rollers 61, 62 and 70 extend in parallel to each other. The recording sheet feeding roller 61, the main conveying roller 61 and the recording sheet ejecting roller 70 are driven to rotate by power given from the sheet conveying motor 65. Moreover, on the common frame 21, a first pinch roller 71 and a second pinch roller 72 are disposed. The first pinch roller 71 faces the main conveying roller 61 and presses the main conveying roller 61, and is rotatably supported by the common frame 21. The second pinch roller 72 faces the recording sheet ejecting roller 70 and presses the recording sheet ejecting roller 70, and is rotatably supported by the common frame 21.

The recording sheet feeding roller 61 and the respective pinch rollers 71, 72 are placed on one side in a thickness direction of a conveyed recording sheet. Moreover, the sheet separating portion 69, the main conveying roller 62 and the recording sheet ejecting roller 70 are placed on the other side in the thickness direction of the conveyed recording sheet. Therefore, the main conveying roller 62 and the recording sheet ejecting roller 65 rotate in a normal rotation direction R1 that is one of rotation directions, and the recording sheet feeding roller 61 rotates in a reverse rotation direction R2 that is the other of the rotation directions, whereby a recording sheet is conveyed in the conveying direction A. The facsimile apparatus 20 forms an image on a surface on one side in the thickness direction of a recording sheet.

The recording sheets placed on the recording sheet placing portion 60 move from the opening formed portion 60a of the recording sheet placing portion 60 toward the sheet separating portion 69, and portions thereof on the downstream side in the sheet conveying direction A enter between the sheet separating portion 69 and the recording sheet feeding roller 61. The sheet separating portion 69 abuts on the other face in a thickness direction of a recording sheet stack composed of the plurality of stacked recording sheets. Moreover, the recording sheet feeding roller 61 abuts on one face in the thickness direction of the recording sheet stack. The recording sheet feeding roller 61 rotates in the reverse rotation direction R2 around an axis thereof in a state of pressing the recording sheet stack against the sheet separating portion 69, thereby feeding and conveying one recording sheet in touch with the recording sheet feeding roller 61 of the plurality of recording sheets, toward the main conveying roller 62.

The recording sheet conveyed toward the main conveying roller 62 enters between the main conveying roller 62 and the first pinch roller 71. The main conveying roller 62 rotates in the normal rotation direction R1, thereby moving the recording sheet in the conveying direction A and making the recording sheet pass through an image forming position. Then, the recording sheet enters between the recording sheet ejecting roller 70 and the second pinch roller 72. The recording sheet ejecting roller 70 rotates in the normal rotation direction R1, thereby moving the recording sheet to an ejecting position.

Between the main conveying roller 62 and the recording sheet ejecting roller 70, the image forming position is set. The image forming position is a position to emit ink to a recording sheet and form an image. The carriage 66 faces a recording portion located in the image forming position of the recording sheet. The carriage 66 is disposed so as to be capable of moving in the crossing direction B, thereby serving as a movable recording unit equipped with an ink recording head. The carriage 66 is given power to move in the crossing direction B by the carriage motor 73.

The carriage 66 holds the ink cartridge 74 so as to be removable. The ink cartridge 74 has an ink tank that contains ink, and the ink recording head serving as a function element that emits ink. The cartridge 74 is connected to the main control portion 47 by a flexible cable having flexibility. When given an ink emitting command by the main control portion 47 via the flexible cable, the ink cartridge 74 emits ink to the recording portion located in the image forming position of the recording sheet.

The motors 66 and 73 are connected to the main control portion 47 by cables, respectively. When given rotation commands by the main control portion 47 via the cables, the motors 66 and 73 make angular displacements individually. The main control portion 47 can cause the carriage 66 to move in the crossing direction B by giving a rotation command to the carriage motor 73. Moreover, the main control portion 47 can move a recording sheet in the sheet conveying direction A by giving a rotation command to the sheet conveying motor 65.

The main control portion 47 gives a rotation command to the carriage motor 73 and controls ink emission timing so as to coincide with a position in the crossing direction B of the ink cartridge 74, whereby a portion of one line of an image to form can be formed on a recording sheet. When printing of the portion of one line is completed, the main control portion 47 gives a rotation command to the sheet conveying motor 65, and causes the main conveying roller 62 to make an angular displacement and move the recording sheet by one line in the conveying direction A, and again makes a portion of one line of the image to form formed on the recording sheet. The main control portion 47 repeats such an operation, whereby it is possible to form an image on one recording sheet.

The image reading portion 51 includes the original sheet placing portion 76, separation rubber 77, the original sheet feeding roller 63, the original rear roller 64, the image sensor 68 serving as an original reading sensor, the original sheet ejecting roller 75, and the sheet conveying motor 65. The sheet conveying motor 65 of the image reading portion 51 is realized by a single motor that is identical to the sheet conveying motor 65 of the image recording portion 50.

The original sheet placing portion 76 holds a plurality of original sheets from which images have not been read. The original sheet placing portion 76 has an opening on the downstream side in the sheet conveying direction A. The separation rubber 77 is placed downstream in the conveying direction of an opening formed portion 76a of the original sheet placing portion 76, and the original sheet feeding roller 63 is placed so as to face the separation rubber 77. The separation rubber 77 and the original sheet feeding roller 63 extend in the crossing direction B. The original sheet feeding roller 63 is pressed toward the separation rubber 77 by pressing means having an resilient force such as a spring or rubber.

The original rear roller 64 is placed downstream in the sheet conveying direction A of the original sheet feeding roller 63, and extends in the crossing direction B. The original sheet ejecting roller 75 is placed downstream in the sheet conveying direction A of the original rear roller 64, and extends in the crossing direction B. Axes of the respective rollers 63, 64 and 75 extend in parallel to each other. The original sheet feeding roller 63, the original rear roller 64 and the original sheet ejecting roller 75 are driven to rotate by power given from the sheet conveying motor 65. Moreover, a pinch roller 77 that presses the original sheet ejecting roller 75 and is rotatably disposed is provided on the common frame 21.

The separation rubber 77, the original sheet rear roller 64 and the pinch roller 77 are placed on one side in a thickness direction of a conveyed original sheet. Moreover, the original sheet feeding roller 63, the image sensor 68 and the original sheet ejecting roller 75 are placed on the other side in the thickness direction of the conveyed original sheet. Consequently, the original sheet feeding roller 63 and the original sheet ejecting roller 75 rotate in the normal rotation direction R1 that is one of the rotation directions, and the original sheet rear roller 64 rotates in the reverse rotation direction R2 that is the other of the rotation directions, whereby an original sheet is conveyed. The facsimile apparatus 20 reads an image formed on a surface on the other side in the thickness direction of an original sheet.

The original sheets placed on the original sheet placing portion 76 move from the opening formed portion 76a of the original sheet placing portion 76 toward the separation rubber 77, and portions thereof on the downstream side in the sheet conveying direction A enter between the separation rubber 77 and the original sheet feeding roller 63. The separation rubber 77 abuts on one face in a thickness direction of an original sheet stack composed of the plurality of stacked original sheets. Moreover, the original sheet feeding roller 63 abuts on the other face in the thickness direction of the original sheet stack. The original sheet feeding roller 63 rotates in the normal rotation direction R1 around an axis thereof in a state of pressing the original sheet stack against the separation rubber 77, thereby feeding and conveying one original sheet in touch with the original sheet feeding roller 63 of the plurality of original sheets, toward the original rear roller 64.

The original sheet conveyed toward the original rear roller 64 enters between the original rear roller 64 and the image sensor 68. The original rear roller 64 rotates in the reverse rotation direction R2, thereby moving the original sheet in the conveying direction A and making the original sheet pass on the image sensor 68. Then, the original sheet enters between the original sheet ejecting roller 75 and the pinch roller 77. The original sheet ejecting roller 75 rotates in the normal rotation direction R1, thereby moving the original sheet to an ejecting position.

By rotating, the original rear roller 64 moves an original sheet in the conveying direction A while pressing the original sheet against image sensor 68. The image sensor 68 reads a portion of one line extending in the crossing direction B of an image formed on the original sheet in image data form at one time. The image sensor 68 gives the image data read by one line to the main control portion 47. Therefore, by synthesizing the image data given to the main control portion 47 as the original sheet entirely passes through the image sensor 68, it is possible to read the image formed on the original sheet in image data form.

In the present embodiment, the image recording portion 50 is provided with a recording sheet detection sensor 78 that detects whether a feeding state of a recording sheet is normal or not. The recording sheet detection sensor 78 gives the main control portion 47 a signal presenting whether feeding of a recording sheet is present or absent. The main control portion 47 is given the signal by the recording sheet detection sensor 78, thereby being capable of determining whether feeding of a recording sheet is present or absent. The recording sheet detection sensor 78 is realized by, for example, an optical sensor, and gives the main control portion 47 a signal presenting a light receiving state that changes in accordance with a feeding state of a recording sheet.

The image reading portion 51 is provided with an original sheet detection sensor 79 that detects whether a feeding state of an original sheet is normal or not. The original sheet detection sensor 79 gives the main control portion 47 a signal presenting whether feeding of an original sheet is present or absent. The main control portion 47 is given the signal by the original sheet detection sensor 79, thereby being capable of determining whether feeding of an original sheet is present or absent. The original sheet detection sensor 79 is realized by, for example, an optical sensor, and gives the main control portion 47 a signal presenting a light receiving state that changes in accordance with a feeding state of an original sheet.

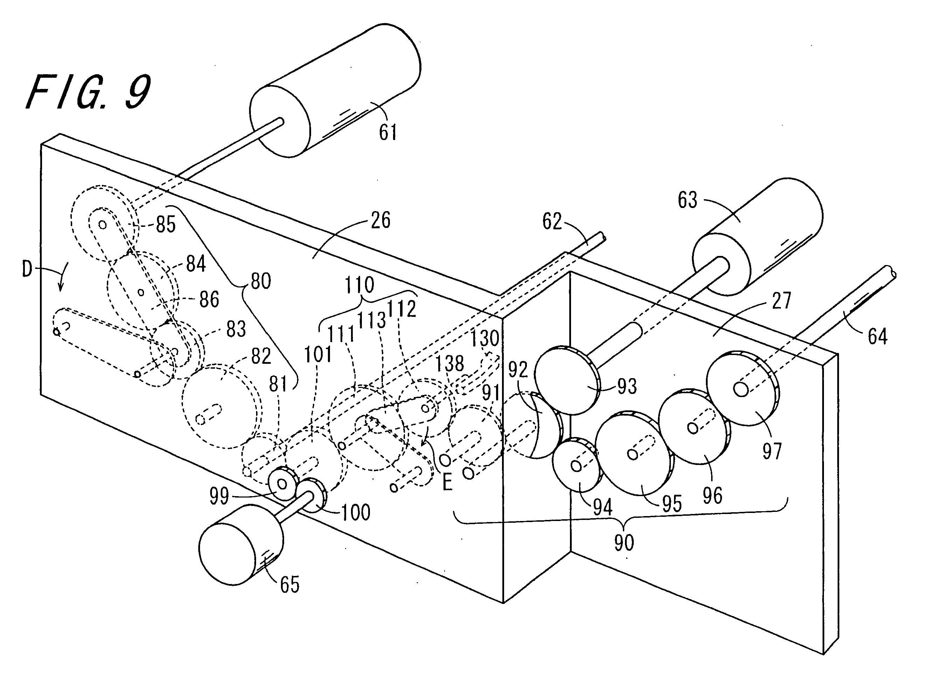

Fig. 9 is a perspective view illustrating power transmission mechanisms 80, 90 and 110. A driving gear 100 is placed on a shaft 99 of the sheet conveying motor 65. The driving gear 100 meshes with a reference gear 101 supported by the common frame 21. The reference gear 101 is rotatably supported by the common frame 21, and disposed so as to be capable of rotating normally and reversely. The reference gear 101 is provided at a middle portion in the conveying direction of the common frame 21.

The recording gear transmission mechanism 80 is placed upstream in the conveying direction with respect to the reference gear 101. The recording gear transmission mechanism 80 includes a first recording gear 81, a second recording gear 82, a third recording gear 83, a fourth recording gear 84, a fifth recording gear 85, and a recording revolving arm member 86. The first to third recording gears 81 to 83 are rotatably supported on the common frame 21. The fourth and fifth recording gears 84 and 85 are supported by the recording revolving arm member 86.

The recording revolving arm member 86 is disposed so as to be capable of making an angular displacement around an axis of the third recording gear 83 and capable of rotating, and is supported on the common frame 21. The fourth recording gear 84 is supported by the recording revolving arm member 86 so as to be capable of making an angular displacement, in a state of being pressed by a spring or the like against an abutting portion of the recording revolving arm member 86. That is to say, the fourth recording gear 84 rotates in a state where a load is applied thereto. Consequently, in a state where the recording revolving arm member 86 is allowed to make an angular displacement, when the third recording gear 83 rotates, the recording revolving armmember 86 makes an angular displacement, and the fourth and fifth recording gears 84 and 85 rotate and revolve. The first to fifth recording gears line up in order of first to fifth from upstream to downstream in the conveying direction.

The first recording gear 81 meshes with the reference gear 101, and rotates together with the reference gear 101. The second recording gear 82 serves as an idle gear meshing with the first recording gear 81. The third recording gear 83 meshes with the second recording gear 82, and serves as a sun gear for the fourth and fifth recording gears 84 and 85. The fourth recording gear 84 meshes with the third recording gear 83, and serves as a planet gear for the third recording gear 83. The fifth recording gear 85 meshes with the fourth recording gear 84, and serves as a planet gear for the third recording gear 83. The recording revolving arm member 86 switches between a state where a displacement in a perimeter direction around the third recording gear 83 is allowed and a state where the displacement in the perimeter direction around the third recording gear 83 is prevented. In concrete, when the recording sheet feeding roller 61 abuts on a recording sheet, the recording revolving arm member 83 switches to the state where the displacement is prevented.

When the reference gear 101 rotates, the first to fifth recording gears 81 to 85 rotate, respectively. In a state where the recording revolving arm member 86 is allowed to move in the perimeter direction around the third recording gear 83, the fourth and fifth recording gears 84 and 85 revolve around the axis of the third recording gear 83, and also rotate around axes thereof, respectively. Moreover, in a state where the recording revolving arm member 86 is prevented from moving in the perimeter direction around the third recording gear 83, the fourth and fifth recording gears 84 and 85 are prevented from revolving around the axis of the third recording gear 83, and rotate.

The main conveying roller 62 is connected coaxially with the first recording gear 81. Moreover, the recording sheet feeding roller 61 is connected coaxially with the fifth recording gear 85. Therefore, as the first recording gear 81 rotates, the main conveying roller 62 and the recording sheet feeding roller 61 rotate. In the same manner, the recording sheet ejecting roller 70 is rotated by a gear transmission mechanism that is not illustrated in the drawing as the sheet conveying motor 65 rotates.

When the sheet conveying motor 65 reversely rotates, the recording revolving arm member 86 is given power to make an angular displacement in one direction of the perimeter direction about the axis of the third recording gear 83 by the fourth recording gear 84. The one direction of the perimeter direction is a direction in which the recording sheet feeding roller 61 approaches a recording sheet placed on the recording sheet placing portion 60 (a direction denoted by arrow D in Fig. 8).

By thus transmitting power to the recording sheet feeding roller 61, the main conveying roller 62 and the recording sheet ejecting roller 70 by the plurality of gears 81 to 85, it is possible to increase choices of positions to place the recording sheet feeding roller 61, the main conveying roller 62 and the recording sheet ejecting roller 70 with respect to the sheet conveying motor 65. Moreover, it is possible to cause the recording sheet feeding roller 61 to rotate in a direction different from those of the main conveying roller 62 and the recording sheet ejecting roller 70 when rotating the sheet conveying motor 65 in one direction.

Further, the facsimile apparatus 20 has switching means for switching between a state where transmission of power from the sheet conveying motor 65 to the original sheet feeding roller 64 and the original sheet ejecting roller 64 is allowed and a state where the power transmission is prevented. The switching means is supported on the common frame 21, and switches a conveying state in a case where the carriage 66 exists in a specified position. In the present embodiment, the switching means includes a switching gear transmission mechanism 110 composed of a plurality of gears 111 and 112. The switching gear transmission mechanism 110 is supported on the one side wall portion 22 of the common frame 21.

The switching gear transmission mechanism 110 is placed downstream in the conveying direction with respect to the reference gear 101. The switching gear transmission mechanism 110 includes a first switching gear 111, a second switching gear 112, and a switching revolving arm member 113. The first switching gear 111 is rotatably supported on the common frame 21. The second switching gear 112 is rotatably supported by the switching revolving arm member 113.

The switching revolving arm member 113 is disposed so as to be capable of making an angular displacement around an axis of the first switching gear 111 and capable of rotating, and is supported on the common frame 21. The second switching gear 112 is supported by the switching revolving arm member 113 so as to be capable of making an angular displacement, in a state of being pressed by a spring or the like against an abutting portion of the switching revolving arm member 113. That is to say, the second switching gear 112 rotates in a state where a load is applied thereto. Consequently, in a state where the switching revolving arm member 112 is allowed to make an angular displacement, when the first switching gear 111 rotates, the switching revolving arm member 112 makes an angular displacement, and the second switching gear 112 rotates and revolves.

The first switching gear 111 meshes with the reference gear 101, and rotates together with the reference gear 101. The first switching gear 111 meshes with the second switching gear 112, and serves as a sun gear for the second switching gear 112. Therefore, the second switching gear 112 serves as a planet gear for the first switching gear 111. The switching revolving arm member 113 switches between a state where a displacement in a perimeter direction around the first switching gear 111 is allowed and a state where the displacement in the perimeter direction around the first switching gear 111 is prevented.

When the reference gear 101 rotates, the first and second switching gears 111 and 112 rotate, respectively. In a state where the switching revolving arm member 113 is allowed to move in the perimeter direction around the first switching gear 111, the second switching gear 112 revolves around the axis of the first switching gear 111, and also rotates around an axis thereof. Moreover, in a state where the switching revolving arm member 113 is prevented from moving in the perimeter direction around the first switching gear 111, the second switching gear 112 is prevented from revolving around the axis of the first switching gear 111, and rotate.

When the sheet conveying motor 65 normally rotates, the switching revolving arm member 113 is given power to make an angular displacement in one direction of the perimeter direction about the axis of the first switching gear 111 by the second switching gear 112. The one direction of the perimeter direction is a direction in which the second switching gear 112 approaches a first reading gear 91 of a reading gear transmission mechanism 90 described later (a direction denoted by arrow E in Fig. 8).

In a reading operation state, a switching piece 138 allows the switching revolving arm member 113 to make an angular displacement. Consequently, the second switching gear 112 moves downward in the conveying direction to be located in a reading operation meshing position, thereby meshing with the first reading gear 91 described later. Moreover, in a state other than the reading operation state, the switching revolving arm member 113 is latched by the switching piece 138 and driven to move to a not reading position. Consequently, the second switching gear 112 moves upward in the conveying direction to be located in a not reading operation meshing position, whereby a meshing state with the first reading gear 91 is released.

The reading gear transmission mechanism 90 is placed downstream in the conveying direction with respect to the switching gear switching mechanism 110. The reading gear transmission mechanism 90 includes a first reading gear 91, a second reading gear 92, a third reading gear 93, a fourth reading gear 94, a fifth reading gear 95, a sixth reading gear 96, and a seventh reading gear 97. The first to seventh reading gears 91 to 97 are rotatably supported on the common frame 21. Both the second reading gear 92 and the seventh reading gear 97 are placed on the downstream side in the conveying direction of the second reading gear 92. Moreover, the second reading gear 92 is placed upstream in the conveying direction of the seventh reading gear 97.

The first reading gear 91 meshes with the second switching gear 112 having moved to the reading operation meshing position, and rotates together with the second switching gear 112. The second reading gear 92 meshes with the first reading gear 91. The third reading gear 93 meshes with the second reading gear 92. The fourth reading gear 94 meshes with the second reading gear 92 . The fifth reading gear 95 meshes with the fourth reading gear 94. The sixth reading gear 96 meshes with the fifth reading gear 95. The seventh reading gear 97 meshes with the sixth reading gear 96. Accordingly, when the first reading gear 91 rotates, the second to seventh reading gears 92 to 97 rotate, respectively.

The original sheet feeding roller 63 is connected coaxially with the third reading gear 93. Moreover, the original sheet ejecting roller 64 is connected coaxially with the seventh recording gear 97. Therefore, as the first reading gear 91 rotates, the original sheet feeding roller 63 and the original sheet ejecting roller 64 rotate. With the gear transmission mechanism, it is possible to cause the original sheet feeding roller 63 to rotate in a direction different from that of the original rear face roller 64 when rotating the sheet conveying motor 65 in one direction.

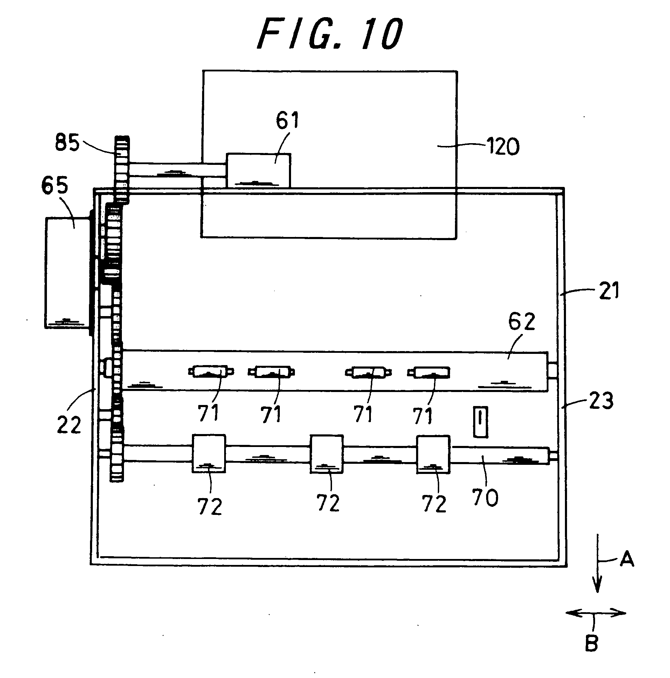

Fig. 10 is a plan view of the facsimile apparatus 20 illustrating a configuration for conveying a recording sheet 120 of the image recording portion 50, in a simplified manner. The one side wall portion 22 of the common frame 21 supports the recording sheet feeding roller 61 at one end thereof. The recording sheet feeding roller 61 is formed so as to be capable of approaching and leaving the recording sheet 120 placed on the recording sheet placing portion 60. Since the recording sheet feeding roller 61 is supported at one end thereof, it is possible to make the apparatus 20 small in size.

The pair of side wall portions 22 and 23 of the common frame 21 support end portions of the main conveying roller 62, respectively. Moreover, the first pinch rollers 71 are disposed in positions facing the main conveying roller 62. The plurality of first pinch rollers 71 extend in the crossing direction B, and abut on part of the recording sheet 120, respectively. In the present embodiment, four first pinch rollers 71 are formed. The respective first pinch rollers 71 abut on the recording sheet 120 passing by the main conveying roller 62, and are placed at almost equal intervals in the crossing direction B.

The pair of side wall portions 22 and 23 of the common frame 21 support end portions of the recording sheet ejecting roller 70, respectively. Moreover, the second pinch rollers 72 are disposed in positions facing the recording sheet ejecting roller 70. The plurality of second pinch rollers 72 abut on part of the recording sheet 120, respectively. In the present embodiment, four second pinch rollers 72 are formed. The respective second pinch rollers 72 abut on the recording sheet 120 on which an image has been formed, and are placed at almost equal intervals in the crossing direction B. Since the second pinch rollers 72 come in contact with an image formation face of a recording sheet on which an image has been formed, it is preferred that the second pinch rollers are star rollers formed like gears. Consequently, it is possible to prevent a formed image from being blurred, and it is possible to make a torque necessary for the sheet conveying motor 65 small.

As the sheet conveying motor 65 rotates, the respective gears 81 to 85 constituting the recording gear transmission mechanism 80 rotate, and the recording sheet feeding roller 61, the main conveying roller 62 and the recording sheet ejecting roller 70 rotate. The recording sheet feeding roller 61 holds the recording sheet 120 in cooperation with the sheet separating portion 69. Moreover, the main conveying roller 62 holds the recording sheet in cooperation with the first pinch rollers 71. Furthermore, the recording sheet ejecting roller 70 holds the recording sheet in cooperation with the second pinch rollers 72. As the respective rollers rotate around the axes in a state of holding the recording sheet, it is possible to convey the recording sheets 120 placed on the recording sheet placing portion 60 one by one to the ejecting position.

Power to press the recording sheet feeding roller 61 against the sheet separating portion 69, power to press the first pinch rollers 71 against the main conveying roller 62 and power to press the second pinch rollers 72 against the recording sheet roller 70 are set so that a torque necessary for the sheet conveying motor 65 becomes as small as possible while the required accuracy of conveyance is maintained.

In the facsimile apparatus 20, there is a case where the quality of an image presented by image data sent from the sender is low because of a transmission speed, the amount of transmitted data and so on. In this case, the required accuracy of conveyance is low. In the present embodiment, the power with which the rollers press the recording sheet is set so as not to be excessive and so as to be as small as possible, and is set so that a torque necessary for the sheet conveying motor 65 becomes as small as possible while the required accuracy of conveyance is maintained.

Consequently, it is possible to suppress the amount of heat generated from the sheet conveying motor 65, and it is possible to prevent that a temperature in an area around the sheet conveying motor 65 becomes high when conveying a recording sheet. Accordingly, even when the common frame 21 is formed with synthetic resin, it is possible to prevent deformation of the common frame 21 because of heat generation of the motor, and it is possible to prevent decrease of the quality of image formation because of thermal deformation.

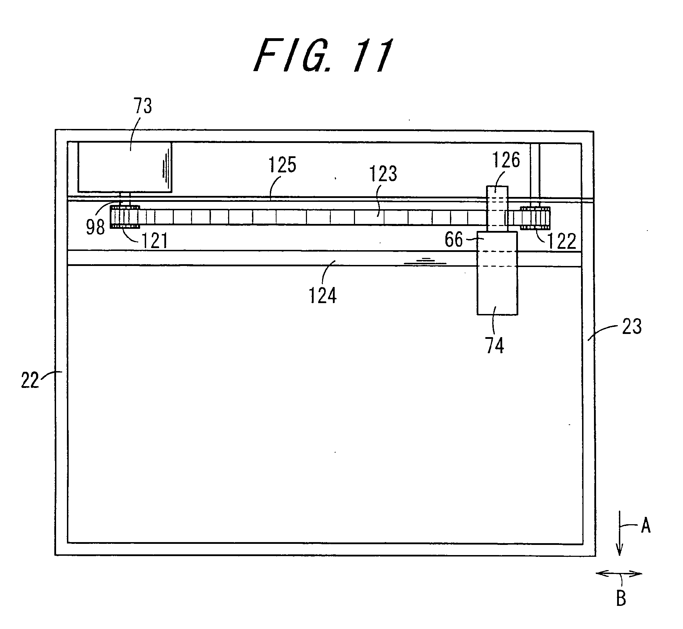

Fig. 11 is a plan view of the facsimile apparatus 20 illustrating a configuration for driving to displace the carriage 66 of the image recording portion 50, in a simplified manner. In order to drive to displace the carriage 66 in the crossing direction, the image recording portion 50 has the carriage motor 73, a belt driving gear 121, a belt driven gear 122, a carriage conveying belt 123, a guiding shaft 124, the guiding plate member 125, and a guiding member guide 126.

The carriage motor 73 is supported on the common frame 21. The belt driving gear 121 is placed on a shaft 98 of the carriage motor 73. The belt driven gear 122 is placed in line with the belt driving gear 121 in the crossing direction B, and is rotatably supported on the common frame 21. The belt driving gear 121 is disposed close to the one side wall portion 22 of the common frame 21, and the belt driven gear 122 is disposed close to the other side wall portion 23 of the common frame 21.

The carriage conveying belt 123 is wound between the belt driving gear 121 and the belt driven gear 122. The carriage conveying belt 123 has a connecting potion that connects with the carriage 66. Therefore, when the belt driving gear 121 is rotated by the carriage motor 73, the carriage 66 moves in the crossing direction B together with the connecting portion of the carriage conveying belt 123.

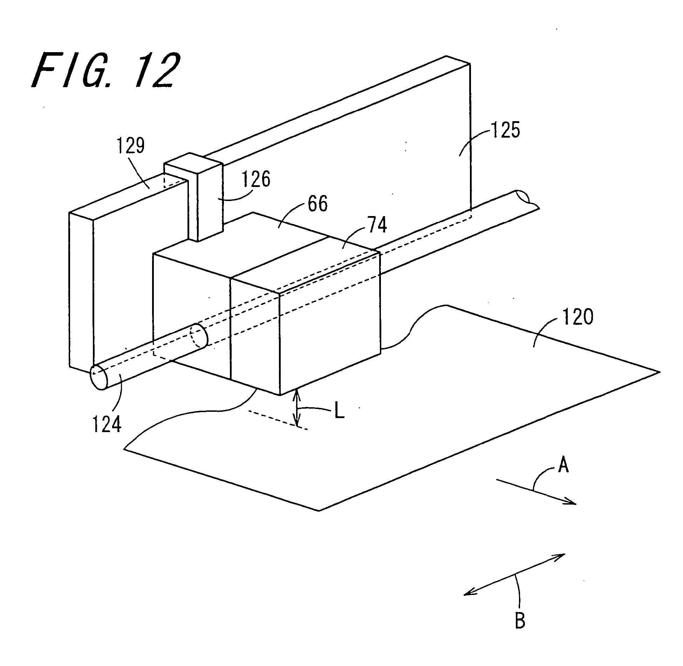

Fig. 12 is a perspective view illustrating a state where the carriage 66 is supported. The guiding shaft 124 extends in the crossing direction B in the vicinity of the carriage conveying belt 123, and has a columnar shape. The guiding shaft 124 is inserted loosely into an insertion hole formed in the carriage 66, and end portions thereof are supported by the pair of side wall potions 22 and 23 of the common frame 21, respectively. Moreover, the guiding member 125 extends in the crossing direction B, and has a plate shape. End portions of the guiding member 125 are supported by the pair of side wall portions 22 and 23 of the common frame 21, respectively. The guiding member 125 has a guiding projection 129 extending in the crossing direction B.

The guiding member guide 126 is fixed to the carriage 66, and has a fitting concavity that fits with the guiding projection 129 of the guiding member 125. The fitting concavity has openings on both sides in the crossing direction B. Therefore, the carriage 66 can move in the crossing direction B in a state where the guiding projection 129 of the guiding member 125 fits into the fitting concavity of the guiding member guide 126.

The carriage 66 is guided by the guiding shaft 124 and the guiding member 125, thereby being allowed to move in the crossing direction B and prevented from moving in other directions. Moreover, by supporting the carriage 66 by the two guiding bodies 124 and 125, it is possible to prevent the carriage 66 from making an angular displacement around the guiding shaft 124, and it is possible to keep a uniform distance L between the conveyed recording sheet 120 and the ink recording head. Furthermore, by forming the guiding plate member 125 and the guiding shaft 124 with metal, it is possible to suppress decrease of the quality of a formed image even if the common frame 21 is thermally deformed.

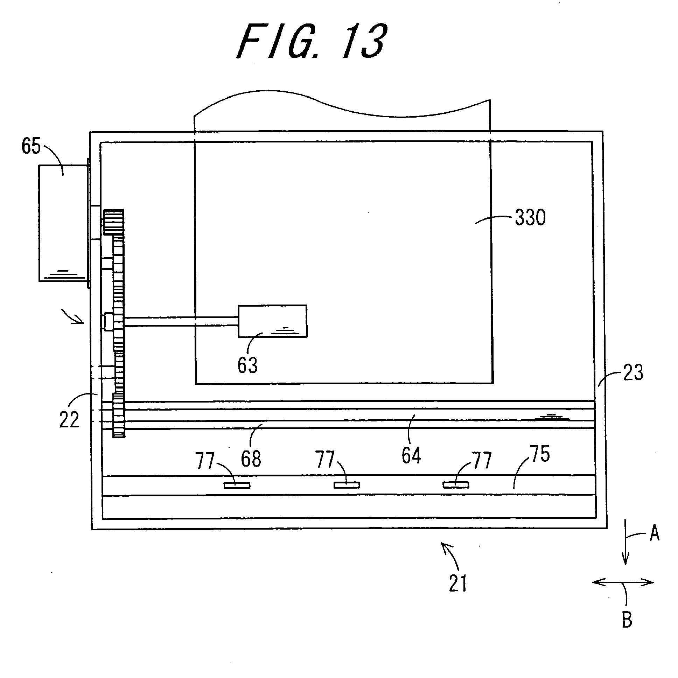

Fig. 13 is a plan view of the facsimile apparatus 20 illustrating a configuration for conveying an original sheet 330 of the image reading portion 51, in a simplified manner. The one side wall portion 22 of the common frame 21 supports the original sheet feeding roller 63 at one end thereof. Since the original sheet feeding roller 63 is supported at one end thereof, it is possible to make the apparatus 20 small in size.

The pair of side wall portions 22 and 23 of the common frame 21 support end portions of the original rear roller 64, respectively. Moreover, the image sensor 68 is disposed in a position facing the original rear roller 64. As the sheet conveying motor 65 rotates, the respective gears 91 to 97 constituting the original gear transmission mechanism 90 rotate, and the original sheet feeding roller 63 and the original rear roller 64 rotate. The original sheet feeding roller 63 holds the original sheet in cooperation with the separation rubber 77. Moreover, the original rear roller 64 holds the original sheet in cooperation with the image sensor 68. As the respective rollers rotate around the axes in a state of holding the original sheet, it is possible to convey the recording sheets 120 placed on the original sheet placing portion 7 6 one by one to the ejecting position.

Further, the original rear roller 64 is configured so as to be removable from the common frame 21. By removing part of the casing of the facsimile apparatus 20, and then removing the original rear roller 64 from the common frame 21, it is possible to expose the image sensor 68. In this state, the operator can eliminate dust attaching to the image sensor 68 and clean the image sensor 68, whereby it is possible to prevent decrease of the quality of reading.

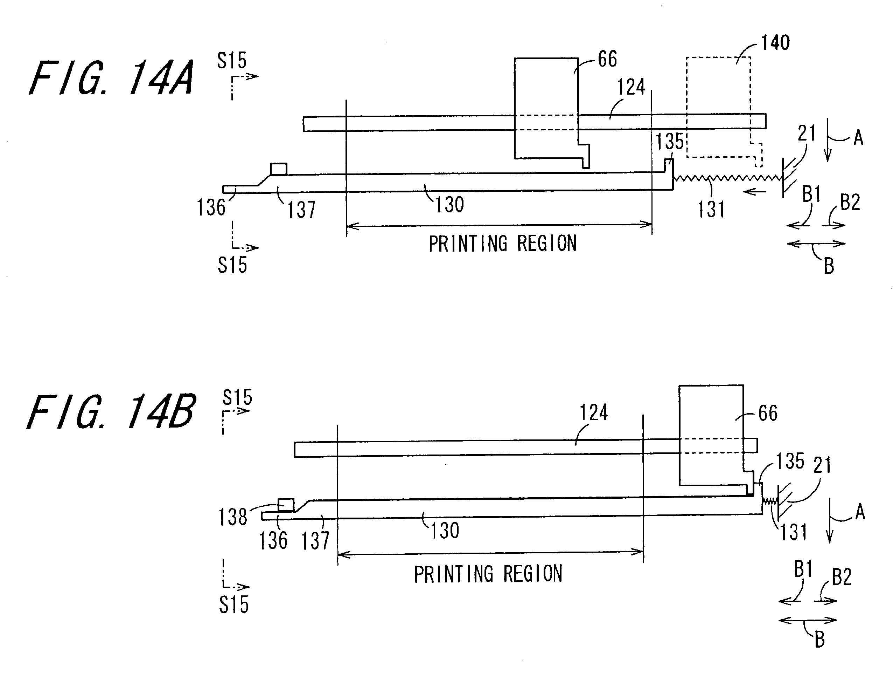

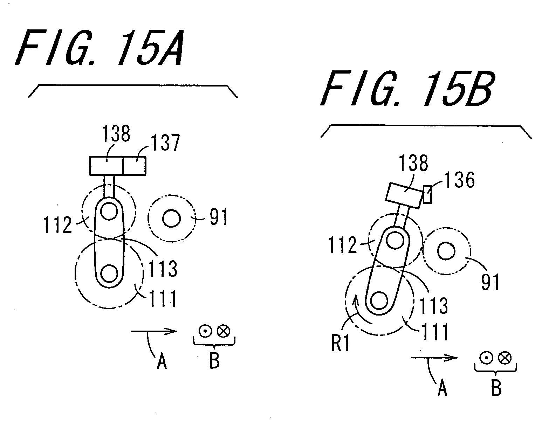

Figs. 14A and 14B are side views illustrating switching means that switches between a recording operation and a reading operation, in a simplified manner. Figs. 15A and 15B are side views taken on line S15-S15 of Figs. 14A and 14B. Figs. 14A and 15A illustrate a recording operation state, and Figs. 14B and 15B illustrate a reading operation state.

The facsimile apparatus 20 has switching means for switching a conveying state between a recording operation and a reading operation. The switching means switches between a recording operation conveying state and a reading operation conveying state in connection with a position of the carriage 66. In the recoding operation conveying state, power transmission from the sheet conveying motor 65 to the original gear transmission mechanism 90 is prevented. Moreover, in the reading operation conveying state, power transmission from the sheet conveying motor 65 to the original gear transmission mechanism 90 is allowed.

In the present embodiment, when the carriage 66 comes off a printing region where it is possible to form an image on a recording sheet, and moves close to the other side wall portion 23 of the common frame 21, the switching means switches to the reading operation conveying state. Moreover, when the carriage 66 is placed in the printing region, the switching means switches to the recoding operation conveying state. In concrete, the switching means has a switching piece 130, a first spring body 131, and the aforementioned switching gear transmission mechanism 110. For explanation, a direction from the other side wall portion 23 toward the one side wall portion 22 will be referred to as one direction B1 of the crossing direction, and a direction from the one side wall portion 22 toward the other side wall portion 23 will be referred to as the other direction B2 of the crossing direction.

The switching piece 130 extends in the crossing direction B, and is supported on the frame 21 so as to be capable of sliding in the crossing direction B. On an end portion in the other direction B2 of the crossing direction of the switching piece 130, a latch portion 135 latched by the carriage 66 is formed. Moreover, on an end portion in the one direction B1 of the crossing direction of the switching piece 130, a tapered portion 136 that is smaller in size in the conveying direction than the remaining part, and a wide portion 137 that is formed in the other direction B2 of the crossing direction from the tapered portion 136 and protrudes upstream in the conveying direction of the tapered portion 136 are formed.

On the end portion in the one direction B1 of the crossing direction of the switching piece 130, an abutting portion 138 formed on the switching revolving arm member 133 abuts. The abutting portion 138 abuts on a side face on the upstream side in the conveying direction of the switching piece 130. A side face on the upstream side in the conveying direction of the tapered potion 136 is smoothly connected to that of the wide portion 137. Therefore, the abutting portion 138 abuts so as to be capable of sliding along the tapered portion 136 and the wide portion 137. The first spring body 131 connects the common frame 21 and the switching piece 130. The first spring body 131 gives the switching piece 130 a force toward the one direction B1 of the crossing direction.

As illustrated in Fig. 14A, when the carriage 66 exists in the printing region, the switching piece 130 moves in the one direction B1 of the crossing direction by spring force of the first spring body 131. Consequently, the abutting portion 138 abuts on the wide portion 137 of the switching piece 130, and moves upstream in the conveying direction. As the switching revolving arm member 113 moves upstream in the conveying direction as the abutting portion 138 moves, a meshing state of the second switching gear 112 with the first reading gear is released as illustrated in Fig. 15A. Consequently, transmission of power of the sheet conveying motor 65 to the reading gear transmission mechanism 90 is prevented.

As illustrated in Fig. 14B, when the carriage 66 comes off the printing region and moves to a standby position 140 in the other direction B2 of the crossing direction, the latch portion 135 of the switching piece 130 engages with the carriage 66, and the switching piece 130 moves in the other direction B2 of the crossing direction together with the carriage 66. The switching piece 130 moves in the other direction B2 of the crossing direction against the spring force of the first spring body 131. Consequently, an abutting state of the abutting portion 138 of the switching revolving arm member 113 on the wide portion 137 is released, and the switching revolving arm member 113 is allowed to make an angular displacement to the downstream side in the conveying direction, namely, brought into an allowed state. In this state, as illustrated in Fig. 15B, the switching first gear rotates in the normal rotation direction R1, and the switching revolving arm member 113 moves downstream in the conveying direction, whereby the second switching gear 112 meshes with the first reading gear 91. Consequently, it becomes possible to transmit power of the sheet conveying motor 65 to the reading gear transmission mechanism 90.

Thus, switching between the recoding sheet conveying state and the original sheet conveying state is performed by changing a mooring position of the abutting portion 138 of the switching revolving arm member 113 that moors on the switching piece 130. In concrete, it is possible to change the mooring position of the abutting portion 138, by moving the carriage 66 to a specified position by the carriage motor 73. As illustrated in Fig. 14B, it is preferred that a position of the carriage 66 when power of the sheet conveying motor 65 is transmitted to the reading gear transmission mechanism 90 is set to a position off the printing region, where the recording head faces a recording head receiving portion 139.

The recording head receiving portion 139 is a member that covers the recording head in order to prevent clogging of an emission hole due to dryness of the recording head and contamination due to leakage of ink, and is fixed to a specified position outside the printing region. Since an operation is switched to an original sheet conveying operation when the carriage is placed in the standby position, there is no need to especially move the carriage 66 for the original sheet conveying operation, and it is possible to switch between the recording sheet conveying operation and the original sheet conveying operation with a simple configuration and control.

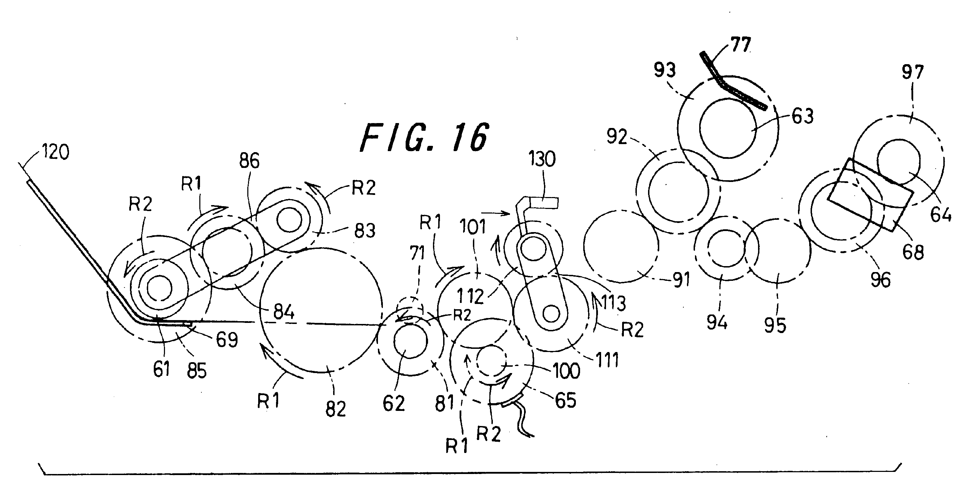

Fig. 16 is a side view for describing a sheet conveying operation when a recording sheet is fed. A direction of rotation of the sheet conveying motor 65 when an image is formed on the recording sheet 120 is the normal rotation direction R1 (a clockwise direction in Fig. 16). On the contrary, when a recording sheet is fed, the sheet conveying motor 65 is rotated in the reverse rotation direction R2 (a counterclockwise direction in Fig. 16). Consequently, the reference gear 101 rotates in the normal rotation direction R1, the first recording gear 81 rotates in the reverse rotation direction R2, the second recording gear 82 rotates in the normal rotation direction R1, and the third recording gear 83 rotates in the reverse rotation direction R2.

As the third recording gear 83 rotates in the reverse rotation direction R2, power to rotate in the reverse rotation direction R2 around the axis of the third recording gear 83 is given to the recording revolving arm member 86. Consequently, the recording revolving arm member 86 makes an angular displacement in a direction approaching the recording sheet, and the fourth and fifth recording gears 84 and 85 rotate in the reverse rotation direction R2 around the axis of the third recording gear 83 together with the recording revolving arm member 86.

Therefore, the recording sheet feeding roller 61 connected to the fifth recording gear 85 comes in contact with the recording sheet, and the recording revolving arm member 86 is prevented from making an angular displacement. Then, the recording sheet feeding roller 61 rotates in the reverse rotation direction R2 together with the fifth recording gear 85. As the recording sheet feeding roller 61 rotates in the reverse rotation direction R2 in contact with the recording sheet, it is possible to convey the recording sheet to the downstream side in the conveying direction.

At this moment, the main conveying roller 62 rotating together with the first recording gear 81 rotates in the reverse rotation direction R2 in which the recording sheet cannot be conveyed. Consequently, the recording sheet conveyed by the recording sheet feeding roller 61 abuts on the main conveying roller 62, whereby a skew of the recording sheet is corrected, and the recording sheet stays in a position between the main conveying roller 12 and the first pinch rollers 71.

Further, when a recording sheet is fed, the carriage 66 is placed in a position other than the standby position as illustrated in Fig. 14A. As described above, the switching revolving arm member 113 is moored by the wide portion 137 of the switching piece 130, and the second switching gear 112 is prevented from meshing with the first reading gear 91. Consequently, the gears 91 to 96 of the reading gear transmission mechanism 90 are prevented from rotating, and it is possible to decrease a torque necessary for the sheet conveying roller 65 at the time of feeding of a recording sheet.

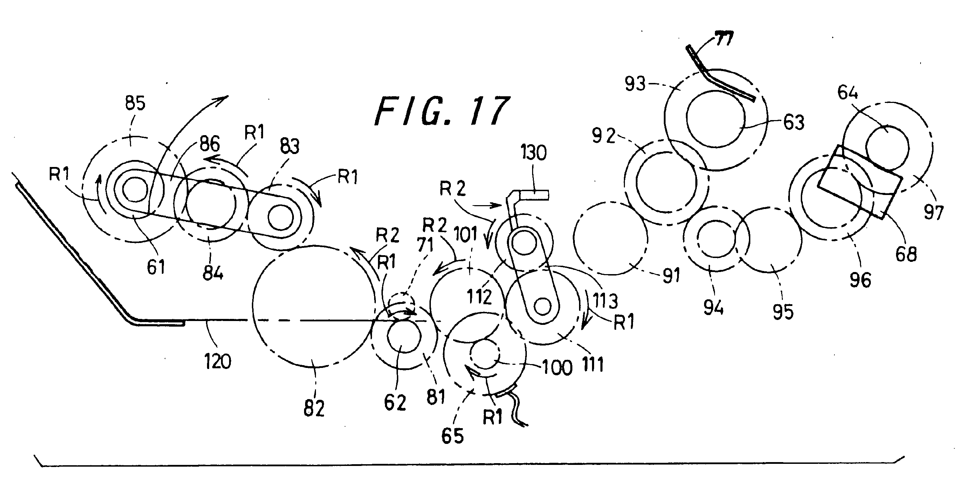

Fig. 17 is a side view for describing a sheet conveying operation when an image is formed on a recording sheet. When an image is formed on a recording sheet, the recording sheet is placed between the main conveying roller 62 and the first pinch rollers 71, and thereafter, the sheet conveying motor 65 is rotated in the normal rotation direction R1 (a clockwise direction in Fig. 17). Consequently, the reference gear 101 rotates in the reverse rotation direction R2, the first recording gear 81 rotates in the normal rotation direction R1, the second recording gear 82 rotates in the reverse rotation direction R2, and the third recording gear 84 rotates in the normal rotation direction R1.

As the third recording gear 83 rotates in the normal rotation direction R1, the recording revolving arm member 86 is given power to rotate in the normal rotation direction R1 around the axis of the third recording gear 83. Consequently, the recording revolving arm member 86 makes an angular displacement in a direction leaving the recording sheet.

Accordingly, the recording sheet feeding roller 61 connected to the fifth recording gear 85 leaves the recording sheet. As the recording sheet feeding roller 61 leaves the recording sheet, when an image is formed on the recording sheet, feeding of a new recording sheet can be prevented. Moreover, it is possible to decrease a torque necessary for the sheet conveying roller 65 at the time of image formation.

At this moment, the main conveying roller 62 rotating together with the first recording gear 81 rotates in the normal rotation direction R1 in which a recording sheet is conveyed. Consequently, the recording sheet abutting on the main conveying roller 62 is conveyed downstream in the conveying direction as the main conveying roller 62 rotates in a state where the recording sheet is held between the main conveying roller 62 and the first pinch rollers 71. Then, the main control portion 47 controls an angular displacement operation of the main conveying roller 62, a position of the carriage 66 and ink emission timing, whereby it is possible to form an image on the recording sheet.

Further, when an image is formed on a recording sheet, the carriage 66 is placed in the printing region outside the standby position as illustrated in Fig. 14A. As described above, the mesh of the second switching gear 112 and the first original gear 91 is prevented, and rotation of the gears 91 to 96 of the reading gear transmission mechanism 90 is prevented. Therefore, it is possible to decrease a torque necessary for the sheet conveying roller 65 at the time of image formation.

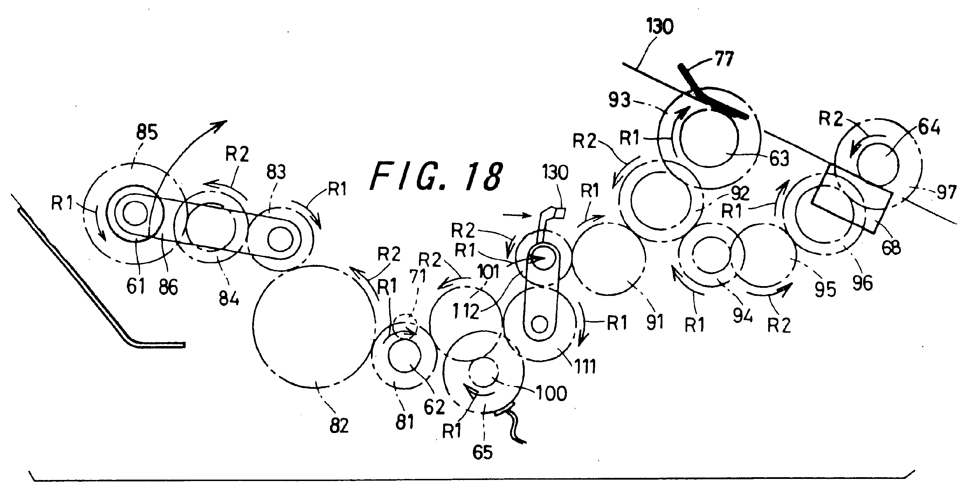

Fig. 18 is a side view for describing a sheet conveying operation when an image of an original sheet is read. When an image of an original sheet is read, the sheet conveying motor 65 is rotated in the normal rotation direction R1 (a clockwise direction in Fig. 18) and the reference gear 101 is rotated in the reverse rotation direction R2, in a state where a recording sheet does not abut on the main conveying roller 62. Moreover, when an image of an original sheet is read, the carriage 66 is placed in the standby position. As the carriage 66 is moved to the standby position, the second switching gear 112 and the first original gear 91 mesh with each other as illustrated in Fig. 15B.

In concrete, when the reference gear 101 is rotated in the reverse rotation direction R2, the first switching gear 111 rotates in the normal rotation direction R1. As the first switching gear 111 rotates in the normal rotation direction R1, power to rotate in the normal rotation direction R1 around the axis of the first switching gear 111 is given to the switching revolving arm member 113, and the second switching gear 112 and the first original gear 91 mesh with each other.

When the first switching gear 111 rotates in the normal rotation direction R1, the second switching gear 112 rotates in the reverse rotation direction R2. Moreover, the first original gear 91 meshing with the second switching gear 112 rotates in the normal rotation direction R1. When the first original gear 91 rotates in the normal rotation direction R1, the second original gear 92 rotates in the reverse rotation direction R2, the third original gear 93 rotates in the normal rotation direction R1, the fourth original gear 94 rotates in the normal rotation direction R1, the fifth original gear 95 rotates in the reverse rotation direction R2, the sixth original gear 96 rotates in the normal rotation direction R1, and the seventh original gear 97 rotates in the reverse rotation direction R2.

Consequently, the original sheet feeding roller 63 connected to the third original gear 93 rotates in the normal rotation direction R1 in a state of abutting on the original sheet. Therefore, it is possible to convey the original sheet to the downstream side in the conveying direction. The original sheet fed by the original sheet feeding roller 63 abuts on the sheet rear roller 64. The original rear roller 64 connected to the seventh original gear 97 rotates in the reverse rotation direction R2 while coming in contact with the original sheet. As the original rear roller 64 rotates in the reverse rotation direction R2, it is possible to make the original sheet pass through between the original rear roller 64 and the image sensor 68 and eject to the ejecting position.

Further, when the sheet conveying motor 65 is rotated in the normal rotation direction R1, the recording sheet feeding roller 61 connected to the fifth recording gear 85 as described above leaves the recording sheet. As the recording sheet feeding roller 61 leaves the recording sheet, it is possible to prevent that the recording sheet is fed when an image of the original sheet is read. Moreover, it is possible to decrease a torque necessary for the sheet conveying roller 65 at the time of image reading.

The main conveying roller 62 rotating together with the first recording gear 81 rotates in the normal rotation direction R1 in which the recording sheet is conveyed. However, during the original reading operation, the recording sheet does not abut on the main conveying roller 62, and therefore, the recording sheet is not conveyed even if the main conveying roller 62 rotates, with the result that it is possible to decrease a torque necessary for the sheet conveying roller 65 at the time of original reading.

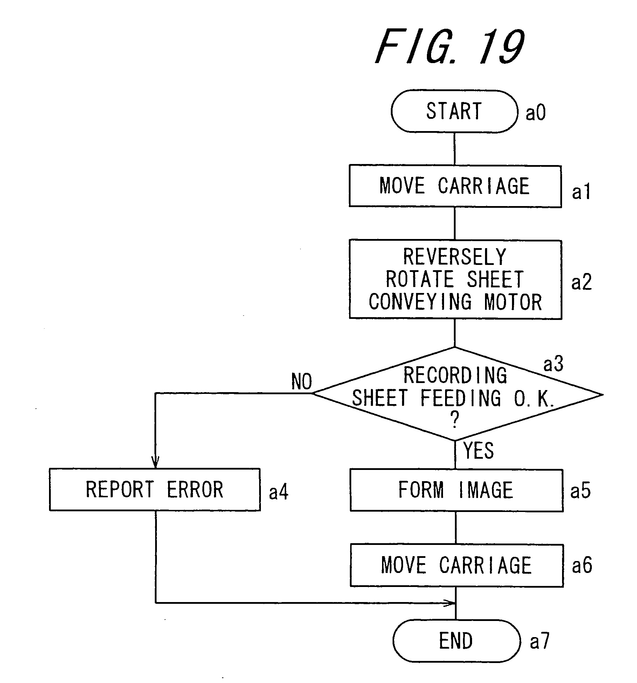

Fig. 19 is a flowchart illustrating an image forming operation of the main control portion 47. First, when the main control portion 47 determines that a command to form an image on a recording sheet is given at step a0, the procedure goes to step a1 and the image forming operation is started.

For example, when the facsimile apparatus 20 is given facsimile data from another facsimile apparatus in a state of being connected to a telephone line, the main control portion 47 determines that the command to form an image on a recording sheet is given, and the procedure goes to step a1. Moreover, for example, when operation information presenting a command to form an image stored in the image storing portion 49 is given with the operation key, the main control portion 47 determines that the command to form an image on a recording sheet is given, and the procedure goes to step a1.

At step a1, the main control portion 47 gives the carriage motor 73 a command so that the carriage 66 comes off the standby position. When the carriage 66 comes off the standby position, the procedure goes to step a2. At step a2, the sheet conveying motor 65 is rotated in the reverse rotation direction R2, and the procedure goes to step a3. Thus, feeding of a recording sheet is started.

At step a3, the main control portion 47 is given a signal presenting whether feeding of the recording sheet is completed or not by the recording sheet detection sensor 78. When the main control portion 47 determines that feeding of the recording sheet has been normally performed based on the signal given by the recording sheet detection sensor 78, the procedure goes to step a5. Moreover, when the main control portion 47 determines that feeding of the recording sheet has not been normally performed, the procedure goes to step a4. At step a4, the main control portion 47 reports a feeding error, and the procedure goes to step a7 and the main control portion 47 terminates the image forming operation.

At step a5, the main control portion 47 acquires image data presenting an image to form from the image storing portion 49 or the modem 46, and controls the carriage motor 73, the sheet conveying motor 65 and ink emission timing based on the image data.

In concrete, the recording sheet is conveyed by one line to the downstream side in the conveying direction while the carriage 66 is caused to reciprocate in the crossing direction B by the carriage motor 73, and ink is emitted from an ink emission point to a position corresponding to the image to form, whereby the image is formed on the recording sheet. At the time of image formation, the sheet conveying motor 65 is rotated in the normal rotation direction R1. When the main control portion determines that image formation is completed, the procedure goes to step a6.

At step a6, the main control portion 47 gives a signal to the carriage motor 73 so as to move the carriage 66 to the standby position. Moreover, rotation of the sheet conveying motor 65 is stopped, and the procedure goes to step a7. At step a7, the main control portion 47 terminates the image forming operation.

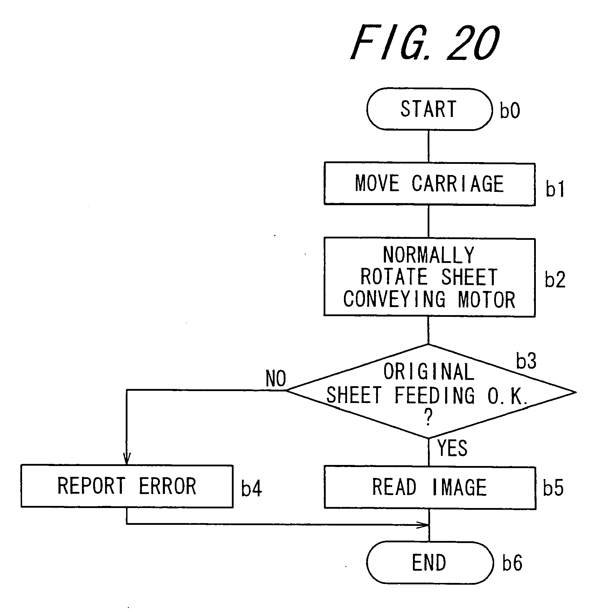

Fig. 20 is a flowchart illustrating an image reading operation of the main control portion 47. First, when the main control portion 47 determines that a command to read an image of an original sheet is given at step b0, the procedure goes to step b1 and the image reading operation is started. For example, when operation information presenting the image reading command is given with the operation key, the main control portion 47 determines that the command to read an image of an original sheet is given, and the procedure goes to step b1.

At step b1, the main control portion 47 gives the carriage motor 73 a command so that the carriage 66 locates in the standby position. When the carriage 66 is placed in the standby position, the procedure goes to step b2. At step b2, the sheet conveying motor 65 is rotated in the normal rotation direction R1, and the procedure goes to step b3. Thus, feeding of the original sheet is started.

At step b3, the main control portion 47 is given a signal presenting whether feeding of the original sheet is completed or not by the original sheet detection sensor 79. When the main control portion 47 determines that feeding of the original sheet has been normally performed based on the signal given by the original sheet detection sensor 79, the procedure goes to step b5. Moreover, when the main control portion 47 determines that feeding of the original sheet has not been normally performed, the procedure goes to step b4. At step b4, the main control portion 47 reports a feeding error, and the procedure goes to step b6 and the main control portion 47 terminates the image reading operation.

At step b5, the main control portion 47 causes the sheet conveying motor 65 to convey the original sheet, and acquires image data given by the image sensor 68. At the time of image reading, the sheet conveying motor 65 is rotated in the normal rotation direction R1. When the main control portion determines that image reading is completed, the main control portion stops rotation of the sheet conveying motor 65 and the procedure goes to step b6. At step b6, the main control portion 47 terminates the image reading operation.

As described above, according to the facsimile apparatus 20 according to the first embodiment of the invention, the recording component supporting frame portion 26 and the reading component supporting frame portion 27 are integrally molded, whereby the common frame 21 is formed. Consequently, compared with a case where a supporting frame for a movable recording unit and a supporting frame for image reading means are individually formed, it is possible to form a frame in one process, and form at a low cost. Moreover, by forming by molding with resin, it is possible to easily form even if the common frame 21 has a complicated shape.

Further, since the recording component supporting frame portion 26 and the reading component supporting frame portion 27 are formed into one piece, there is no need to assemble the frame for the movable recording unit and the frame for the image reading means into one piece as in the related art, and it is possible to shorten time spent for assemble of the image forming apparatus. Moreover, since the frames are formed into one piece, a connecting portion such as a screw hole for connecting the respective frames is not necessary, and it is possible to make the facsimile apparatus 20 small in size.

Further, as the pair of side wall portions 22 and 23 of the common frame 21 are connected by the plurality of connecting portions 24 and 25, it is possible to form the common frame 21 into a lattice frame shape. Consequently, it is possible to increase the rigidity of the common frame 21. Therefore, even if the common frame 21 is formed with synthetic resin, it is possible to obtain rigidity required as the frame. Accordingly, it is possible to suppress decrease of the accuracy of sheet conveyance resulting from deformation of the frame, and it is possible to suppress decrease of the accuracy of image recording and the accuracy of image reading.

Further, as the connecting portions 24 and 25 form part of the sheet guides, there is no need to additionally dispose a connecting portion for connecting the pair of side wall portions 22 and 23, and it is possible to prevent the facsimile apparatus from becoming large in size. Moreover, a fixing process for fixing the sheet guide to the common frame 21 is not necessary, and it is possible to further shorten time spent for assemble of the facsimile apparatus 20.

Further, by disposing the respective conveying means, the respective conveying driving sources and the respective transmission mechanisms relating to recording sheet conveyance and original sheet conveyance on the common frame 21, it is possible to place them close together, it is possible to make the common frame 21 small in size, and it is possible to make the facsimile apparatus 20 space-saving. Moreover, by making part or all of the respective conveying means, the respective conveying driving sources and the respective transmission means shared, it is possible to further downsize the facsimile apparatus 20.

In the present embodiment, the one sheet conveying motor 65 serves as both the recording sheet conveying driving source and the original sheet conveying driving source, so that it is possible to reduce the number of the motors required and a space for installing the motors, and it is possible to further downsize the facsimile apparatus 20 and configure at a low cost.

Further, by preventing transmission of power from the sheet conveying motor to the original sheet conveying means in the recording sheet conveying state by the switching means for switching a conveying state, it is possible to decrease a torque necessary for the sheet conveying motor 65. Consequently, it is possible to use a low-torque motor, and it is possible to form at a low cost.

Further, it is possible to suppress the amount of heat generated from the sheet conveying motor 65. By thus suppressing the amount of heat generated from the sheet conveying motor 65, it is possible to suppress deformation of the common frame 21 due to heat even if the common frame 21 is formed with resin and the sheet conveying motor 65 is supported on the common frame 21. Consequently, it is possible to prevent decrease of the quality of image formation due to thermal deformation caused by the sheet conveying motor 65.

Further, in the present embodiment, the switching means switches a conveying state in connection with a movement of the carriage 66, that is, in connection with a placement state with respect to the standby position. By using a planet gear and a sun gear in a configuration of the switching means, it is possible to switch a conveying state by simple control such as control of a rotation direction of the sun gear and change of control of a position of the carriage 66. Therefore, it is not necessary to additionally dispose driving means for switching a transmission state, such as a solenoid, and it is possible to make the facsimile apparatus 20 small in size and realize at a low cost.

Further, pressing forces by which the respective pinch rollers 71, 72 and 75 press the respective rollers 62, 70 and 77 are set so as to become as small as possible while required accuracy of image formation is maintained. Consequently, it is possible to prevent decrease of the accuracy of image formation and the accuracy of image reading, and reduce a torque necessary for the sheet conveying motor 65, and it is also possible to suppress decrease of the quality of an image due to heat generation of the motor. By thus suppressing the amount of heat generated from the sheet conveying motor 65, it is possible to suppress deformation of the common frame 21 due to heat even if the common frame 21 is formed with resin and the sheet conveying motor 65 is supported on the common frame 21. Therefore, it is possible to prevent decrease of the quality of image formation due to thermal deformation caused by the sheet conveying motor 65.

Further, it is preferred that the main control portion 47 executes slow-up control of gradually increasing a rotation speed and attaining a target speed so that torques generated by the sheet conveying motor 65 and the carriage motor 73 do not exceed a predetermined value. Consequently, compared with a case where a rotation speed is abruptly increased, it is possible to reduce torques necessary for the sheet conveying motor 65 and the carriage motor 73, and it is possible to further suppress the amount of heat generated by the respective motors 65 and 73.

Further, it is preferred that the sheet conveying motor 65 and the carriage motor 73 use rotors whose moment of inertia is low. For example, by using a PM motor (permanent magnet motor) using a rotor made of plastic resin containing magnet, it is possible to suppress the amount of heat generation of the motor. Consequently, even if the common frame 21 is formed with resin, it is possible to prevent thermal deformation, and maintain the quality of an image required of a formed image. Moreover, in the present embodiment, it is possible to reduce a torque necessary for the sheet conveying motor 65, and it is possible to apply even a PM motor whose moment of inertia is small as the driving source of each of the rollers.

Further, it is preferred that the respective gears and the common frame 21 are made of synthetic resins having almost equal coefficients of thermal expansion. Consequently, in a case where a temperature in an area around the facsimile apparatus 20 changes, the respective gears and the common frame 21 contract or expand almost equally. Consequently, a gap between a shaft portion of each of the gears and an insertion hole formed on the common frame for inserting the shaft portion of the gear does not change largely, and it is possible to prevent decrease of the accuracy of conveyance.

Further, by guiding the carriage 66 in the crossing direction B by the guiding shaft 124 and the guiding plate member 125 that are made of metal, it is possible to maintain a uniform interval between the recording head installed in the carriage 66 and a recording sheet. Therefore, even if the common frame 21 is deformed by heat and external force, it is possible to accurately move the carriage 66 in the crossing direction B, and it is possible to suppress decrease of the quality of an image formed on a recording sheet.

Further, by using the aforementioned common frame 21 in the facsimile apparatus 20, it is possible to downsize portions that execute image reading and image formation and, even if other components such as communication control means and a dial operating portion are necessary, it is possible to downsize the facsimile apparatus as a whole. Moreover, in the case of formation of an image presented by image data acquired via a communication line onto a recording sheet, there is a case where the quality of the image presented by the image data sent from the sender is low due to problems of a transmission speed, the amount of transmitted data and so on. In such a case, by using the common frame 21, , by using the common frame 21, it is possible to form the image presented by the image data sent from the sender of required image quality, as well as it is possible to downsize and form at a low cost.

Further, in the present embodiment, by rotating the sheet conveying motor 65 in the reverse rotation direction R2, it is possible to feed and convey a recording sheet just before the main conveying roller 62. Moreover, by rotating the sheet conveying motor 65 in the normal rotation direction R1, it is possible to form an image onto the recording sheet conveyed just before the main conveying roller 62 while preventing feeding of a recording sheet. Thus, by switching a rotation direction of the sheet conveying motor 65, it is possible to switch between a conveying state for feeding a recording sheet and a conveying state for image formation on a recording sheet, and it is possible to simplify the control and configuration.

There is a case where a recording sheet conveyed by the recording sheet feeding roller 61 skews with respect to the main conveying roller 62 and enters between the main conveying roller 62 and the pinch rollers 71. By reversely rotating the main conveying roller 62 at the time of feeding of a recording sheet, it is possible to put a tip of the recording sheet to the main conveying roller 2 and make the recording sheet parallel to the main conveying roller 2, whereby it is possible to prevent skew.

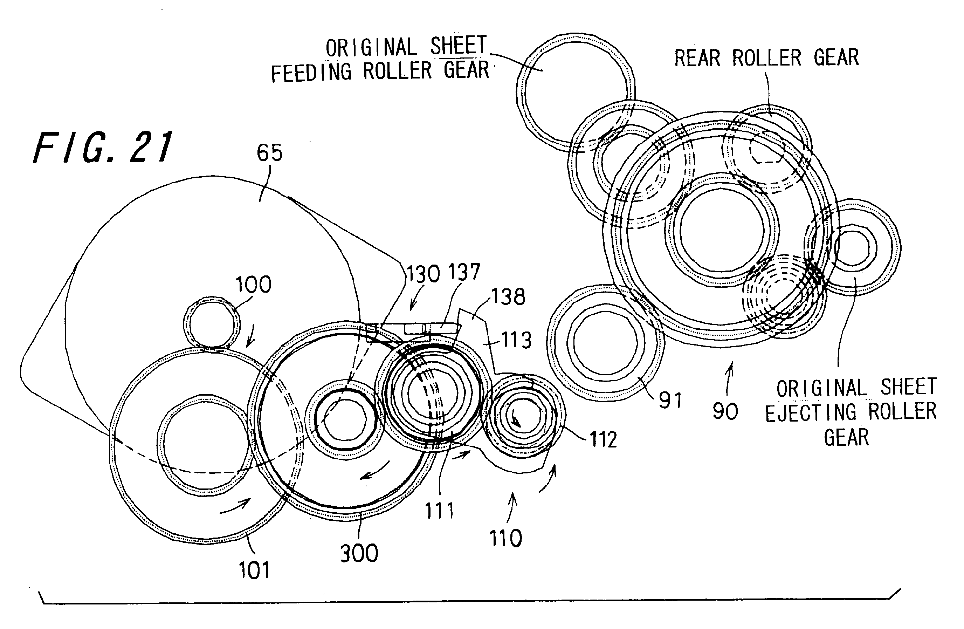

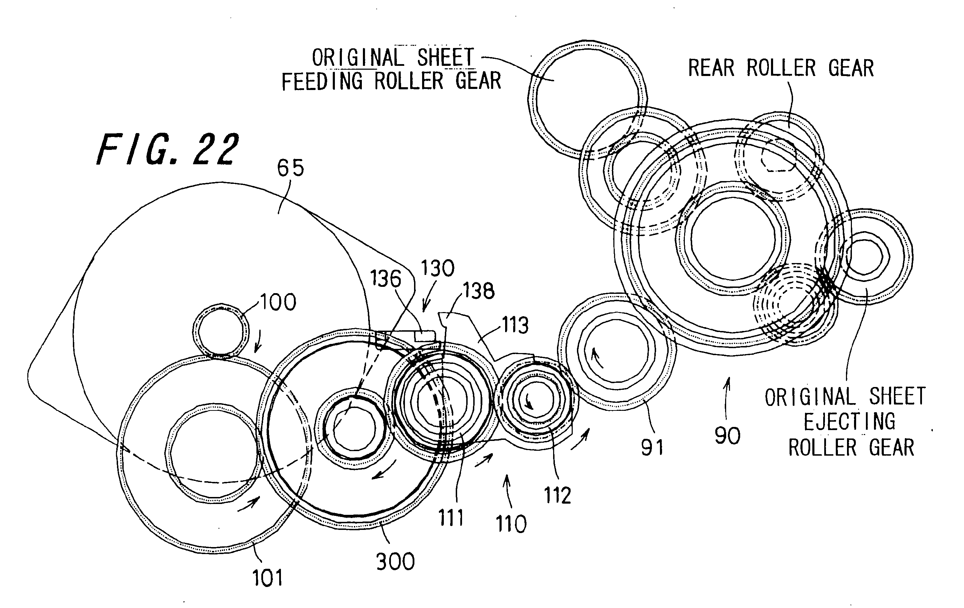

Fig. 21 is a side view illustrating part of a facsimile apparatus according to a second embodiment of the invention, for describing a sheet conveying operation when an image is formed on a recording sheet. Fig. 22 is a side view illustrating part of the facsimile apparatus according to the second embodiment of the invention, for describing a sheet conveying operation when an original sheet is conveyed. In Figs. 21 and 22, the switching gear transmission mechanism 110 and the reading gear transmission mechanism 90 are illustrated, and illustration of the recording gear transmission mechanism 80 is omitted.

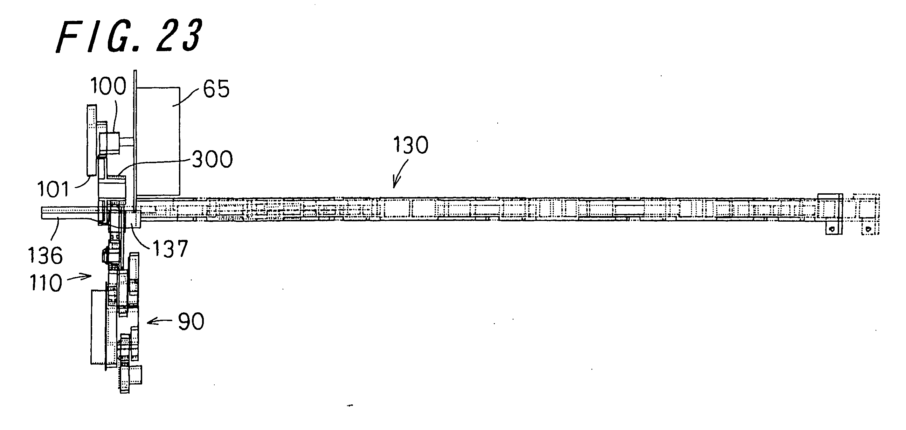

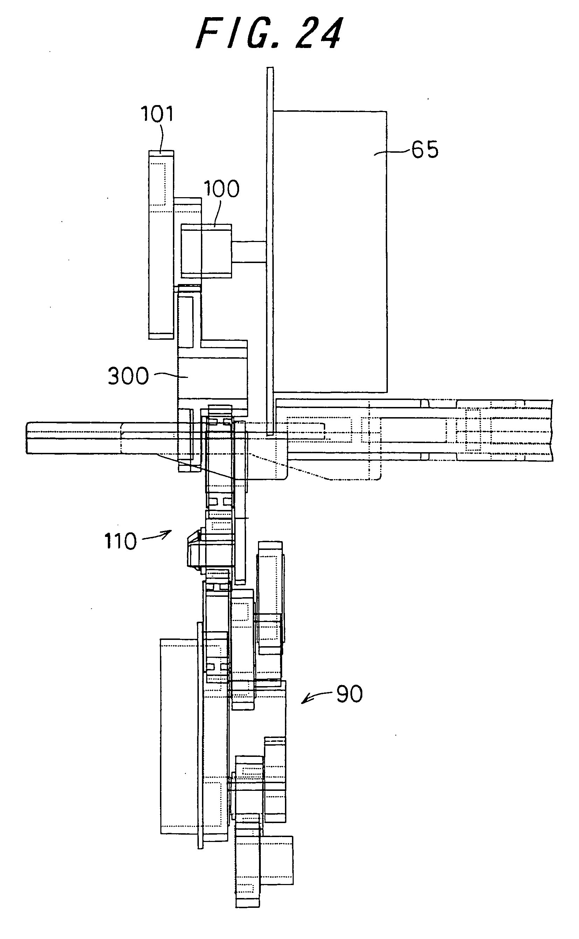

Fig. 23 is a plan view illustrating part of the facsimile apparatus according to the second embodiment of the invention, and illustrating the switching member 130. Fig. 24 is a magnified plan view illustrating part of the switching member 130. In Figs. 23 and 24, a solid line presents a state where the carriage 66 is in a position other than the standby position, and a chain double-dashed line presents a state where the carriage 66 is in the standby state.

The facsimile apparatus of the second embodiment is the same in configuration as the facsimile apparatus 20 of the first embodiment illustrated in Fig. 1 except for switching means and a gear configuration. Therefore, the different portions will be described, and the same components will not be described and will be denoted by the same reference numerals.

In concrete, the reference gear 101 transmits power to an indirect gear 300, and the indirect gear 300 meshes with the first switching gear 111. Moreover, the reading gear transmission mechanism 90 transmits power from the second reading gear 92 to a feeding gear to which an original sheet feeding roller is connected, a rear gear to which an original sheet rear roller is connected, and a sheet ejecting gear to which an original sheet ejecting roller gear is connected. The power is transmitted via other gears so that the feeding gear rotates in one direction of a perimeter direction and the rear gear and the sheet ejecting gear rotate in the other direction of the perimeter direction when the second reading gear 92 rotates.

In a case where the carriage 66 is located in positions other than the standby position, the wide portion 137 of the switching piece 130 faces the abutting portion 138 of the switching revolving arm member 113 as illustrated in Fig. 21. In this state, when the sheet conveying motor 65 rotates in a rotation direction in which a recording sheet is conveyed, power by which the switching revolving arm member 113 moves in a direction approaching the first reading gear 91 is given. At this moment, the abutting portion 138 of the switching revolving arm member 113 abuts on the wide portion 137 of the switching piece 130, and the mesh of the second switching gear 112 and the first reading gear 91 is prevented.

In a case where the carriage 66 is located in the standby position, the tapered portion 136 of the switching piece 130 faces the abutting portion 138 of the switching revolving arm member 113 as illustrated in Fig. 22. In this state, when the sheet conveying motor 65 rotates in the rotation direction in which a recording sheet is conveyed, power by which the switching revolving arm member 113 moves in a direction approaching the first reading gear 91 is given. Since the tapered portion 136 of the switching piece 130 is formed depressed in the conveying direction from the wide portion 137, an angular displacement of the switching revolving arm member 113 is allowed, the switching revolving armmember 133 makes an angular displacement, and the second switching gear 112 and the first reading gear 91 mesh with each other. Thus, the facsimile apparatus of the second embodiment is capable of producing the same effect as the facsimile apparatus of the first embodiment though the gear configuration is different from that of the facsimile apparatus of the first embodiment.

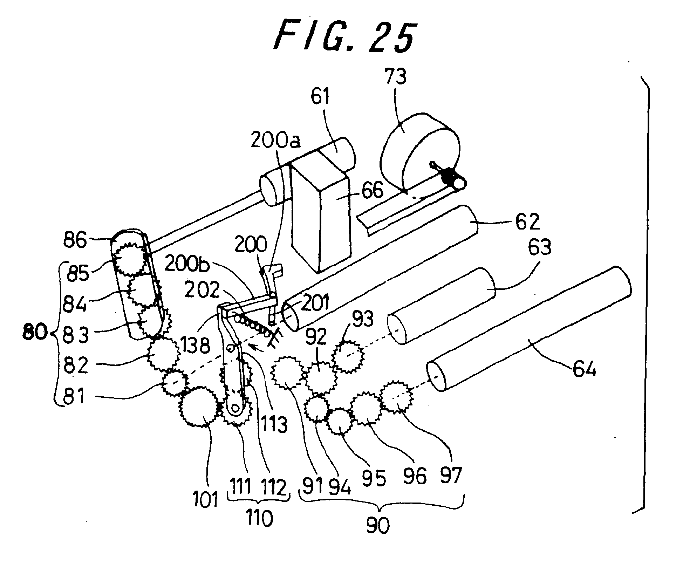

Fig. 25 is a perspective view illustrating part of a facsimile apparatus according to a third embodiment of the invention. The facsimile apparatus of the third embodiment is the same in configuration as the facsimile apparatus 20 of the first embodiment illustrated in Fig. 1 except for switching means. Therefore, the different portion will be described, and the same components will not be described and will be denoted by the same reference numerals. Switching means of the facsimile apparatus of the third embodiment includes a bent piece 200 bent like an L shape, a supporting member 101 for supporting the bent piece 200 so as to be capable of making an angular displacement, and a spring body 202.

The bent piece 200 has a carriage abutting portion 200a that abuts on the carriage 66, and a revolving armmember abutting portion 200 that is bent from the abutting portion and abuts on the abutting portion 138 of the switching revolving armmember 113. The bent piece 200 is disposed close to the one side wall portion 22. As the carriage abutting portion 200a of the bent piece 200 moves in the crossing direction, the revolving arm member abutting portion 200b moves in the conveying direction. As the carriage 66 moves the carriage abutting portion 200a in the one direction of the crossing direction, the revolving arm member abutting portion 200b moves downstream in the conveying direction. The spring body 202 connects the revolving arm member abutting portion 200b and the common frame 21, and gives power to go upstream in the conveying direction to the revolving arm member abutting portion 200b. Moreover, the abutting portion 138 of the switching revolving arm member 113 abuts on the revolving arm abutting portion 200b on the upstream side in the conveying direction.

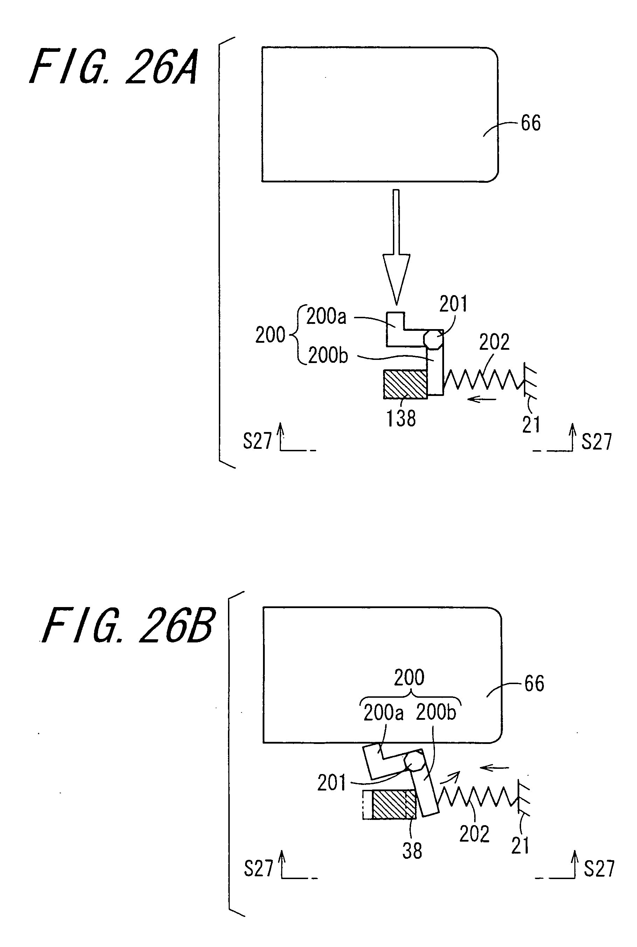

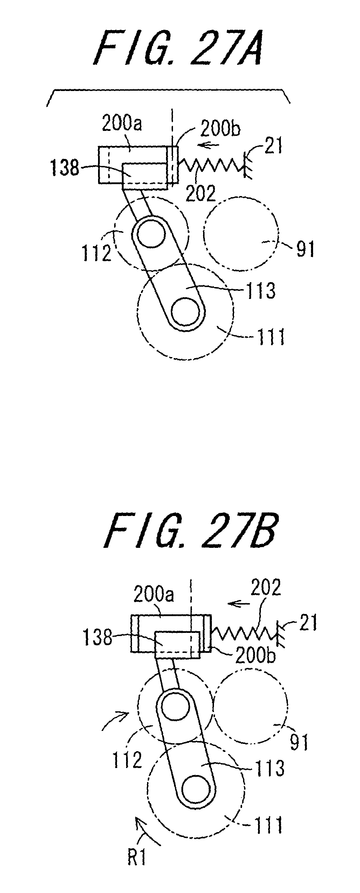

Figs. 26A and 26B are plan views illustrating the bent piece 200 in a simplified manner. Figs. 27A and 27B are side views taken on line S27-S27 of Figs. 26A and 26B. Figs. 26A and 27A illustrate a recording operation state, and Figs. 26B and 27B illustrate a reading operation state. In the other facsimile apparatus 20, the standby position of the carriage 66 is set close to the one side wall portion.

As illustrated in Fig. 26A, in a case where the carriage 66 exists in the printing region, the bent piece 200 is in a state where the revolving arm member abutting portion 200b is located upstream in the conveying direction due to spring force of the spring body 202. As the abutting portion 138 of the switching revolving arm member 113 abuts on the revolving arm member abutting portion 200b of the bent piece 200, the switching revolving arm member 113 is prevented from moving downstream in the conveying direction, and the mesh of the second switching gear 112 and the first reading gear is released, as illustrated in Fig. 27A. Consequently, it is prevented that power of the sheet conveying motor 65 is transmitted to the reading gear transmission mechanism 90.

As illustrated in Fig. 26B, in a case where the carriage 66 comes off the printing region and exists in the standby position, the carriage abutting portion 200a of the bent piece 200 abuts. Consequently, the bent piece 200 makes an angular displacement against the spring force of the spring body 202, and the revolving arm member abutting portion 200b moves downstream in the conveying direction. Consequently, as illustrated in Fig. 27B, the abutting portion 138 of the switching revolving arm member 113 can move downstream in the conveying direction, and the first switching gear 111 rotates in the normal rotation direction R1, whereby the second switching gear 112 and the first reading gear 91 mesh with each other. Consequently, it is allowed that power of the sheet conveying motor 65 is transmitted to the reading gear transmission mechanism 90.

As described above, the facsimile apparatus of the third embodiment is also capable of producing the same effect as the facsimile apparatus of the first embodiment. Moreover, the configuration of the switching member that prevents and allows an angular displacement of the switching revolving arm member 113 is not limited to the aforementioned configuration and may be other configurations. For example, it is possible to use a solenoid, thereby moving the switching member and switching between a state where an angular displacement of the switching revolving arm member 113 is allowed and a state where prevented.

Further, the facsimile apparatuses of the aforementioned first to third embodiments are merely examples of the invention, and it is possible to change the configurations within the scope of the invention. For example, in the aforementioned embodiments, application of the invention to a facsimile apparatus equipped with an inkjet-type printer is described, but it is also possible to apply to an image forming apparatus of thermal transfer type, sublimatic thermal transfer type or dot impact type. That is to say, it is possible to apply to a serial-type image forming apparatus that moves a recording head in a direction crossing a conveying direction of a recording sheet while conveying the recording sheet.

Further, the power transmission mechanism that transmits power from the sheet conveying roller to the respective rollers 61, 62 and 70 for conveying a recording sheet and the respective rollers 63, 64 and 75 for conveying an original sheet is realized by such a configuration that the gears are directly connected. However, the power transmission mechanism is not limited to the above configuration, and may be configured by using another mechanism such as a belt or a chain, or by using both the gears and another mechanism.

Further, the configuration of the switching means is an example, and may be any configuration as far as a conveying state can be switched. For example, a conveying state may be switched by using a solenoid. However, it is preferable to drive the switching means by using power used for moving the carriage 66, because it is not necessary to additionally dispose a driving source for driving the switching means.

Further, in the present embodiment, in order to reduce a torque necessary for the sheet conveying motor 65, in a case where a recording sheet conveying operation is performed, power transmission to the respective rollers 63 and 64 serving as the original sheet conveying means is prevented. However, in a case where a recording sheet conveying operation is performed, power transmission to part or all of the gears of the gear line for conveying an original sheet may be prevented. Moreover, in a case where an original sheet conveying operation is performed, power transmission to part or all of the gears of the gear line for conveying a recording sheet may be prevented. Furthermore, in the present embodiment, the motor is shared in order to save a space, but part or all of the conveying means, the conveying driving sources and the transmitting means relating to recording sheet conveyance and original sheet conveyance may be shared.

Further, in the present embodiment, as illustrated in Fig. 1, the first motor supporting portion 31 and the second motor supporting portion 32 are formed into separate bodies from the common frame 21. However, the first motor supporting portion 31 and the second motor supporting portion 32 may be formed on the common frame 21.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

### Industrial Applicability

According to the invention, it is possible to form the common frame that supports the movable recording unit and the image reading means in one molding process, and it is possible to form at a low cost, compared with a case where a frame for image recording and a frame for image reading are individually formed. Moreover, by forming by molding with resin, it is possible to easily form even if the common frame has a complicated shape.

Further, since a frame portion for image recording and a frame portion for image reading are formed into one piece, there is no need to assemble a frame for the movable recording unit and a frame for the image reading means into one piece as in the related art, and it is possible to shorten time spent for assemble of the image forming apparatus. Moreover, since the frames are formed into one piece, a connecting portion such as a latch portion, a nail portion or a screw hole formed portion for connecting the respective frames is not necessary, and it is possible to make the apparatus small in size.

Further, according to the invention, as the pair of side wall portions are connected by the plurality of connecting portions, it is possible to increase the rigidity of the common frame. Consequently, even if the frame portion for image recording and the frame portion for image reading are molded with resin, it is possible to prevent that the rigidity becomes insufficient. Accordingly, it is possible to suppress decrease of the accuracy of image recording and the accuracy of image reading. Moreover, as the sheet guide also serves as the connecting portion, it is possible to prevent the facsimile apparatus from becoming large in size. Since a fixing process for fixing the sheet guide to the common frame is not necessary, it is possible to further shorten time spent for assemble of the image forming apparatus.

For example, one of the sheet guides may be a guide that guides a recording sheet from a recording sheet placing position to a recording sheet recording position. Moreover, for example, the sheet guide may be a guide that guides a recording sheet from the recording sheet recording position to a recording sheet ejecting position.

Further, according to the invention, it is possible to place the conveying means, the conveying driving sources and the transmission mechanisms close together, and it is possible to make the common frame space-saving. Consequently, it is possible to further downsize the image forming apparatus. Moreover, as the conveying means, the conveying driving sources and the transmission mechanisms are supported on the one common frame, it is possible to share part or all of them.

Further, according to the invention, a single common driving source disposed to the common frame drives the recording sheet conveying means and the original sheet conveying means. Consequently, it is possible to decrease the number of driving sources, whereby it is possible to make a space for installing the driving sources small, and it is possible to configure so as to be small in size at a low cost.

Further, according to the invention, the amount of heat generated from the common sheet conveying driving source is suppressed, whereby it is possible to suppress deformation of the common frame due to heat even if the common frame is formed with resin. Consequently, even if using the common frame molded with resin, it is possible to prevent decrease of the quality of image formation by thermal deformation. Moreover, by maintaining accuracy of conveyance necessary for achieving predetermined accuracy of image formation and accuracy of image reading, it is possible to prevent decrease of the accuracy of image formation and the accuracy of image reading while suppressing deformation by heat.

For example, in order to decrease a torque necessary for the common sheet conveying driving source, part or all of power transmission from the common sheet conveying driving source to the original sheet conveying means may be prevented in a case where a recording sheet conveying operation is performed. Moreover, in a case where an original sheet conveying operation is performed, part or all of power transmission from the common sheet conveying driving source to the recording sheet conveying means may be prevented. Furthermore, pressing force for holding a sheet by the conveying roller and the pinch roller may be decreased.

Further, according to the invention, in one of recording sheet conveyance state and original sheet conveyance state, power transmission to the conveying means used for the other sheet conveyance is prevented, whereby it is possible to decrease a torque necessary for the common sheet conveying driving source. Therefore, it is possible to suppress the amount of heat generated from the common sheet conveying driving source, and even if using the common frame molded with resin, it is possible to prevent decrease of the quality of image formation resulting from increase in temperature caused by heat generation of the common sheet conveying driving source.

Further, according to the invention, the switching means switches a state of power transmission of the common sheet driving source in connection with a movement of the movable recording unit. Consequently, it is possible to realize the switching means with a simple configuration. Moreover, by switching a state of power transmission of the common sheet driving source by using a movement force when the movable recording unit moves, it is possible to easily switch the power transmission state without additionally disposing a power source for switching the power transmission state. Consequently, it is possible to simplify the control and configuration, whereby it is possible to configure at a low cost and downsize.

Further, according to the invention, a planet gear and a sun gear are used, whereby it is possible to switch to an original sheet conveyable state by controlling a position of the movable recording unit. Consequently, it is possible to switch a transmission state with a simple configuration, so that it is not necessary to additionally dispose driving means for switching the transmission state, and it is possible to downsize the image forming apparatus and configure at a low cost.

Further, according to the invention, the movable recording unit is guided in the crossing direction by the plurality of metal guide bodies, whereby it is possible to keep a uniform interval between the movable recording unit and a recording sheet. Moreover, even if the common frame molded with resin is deformed by heat or external force, it is possible to accurately move the movable recording unit in the crossing direction, and it is possible to prevent decrease of the quality of a recorded image.

Further, according to the invention, the image forming apparatus is a facsimile apparatus. By using the common frame as described above, it is possible to downsize portions that perform image reading and image formation and, even if communication control means, a dial operating portion and so on are disposed, it is possible to downsize the facsimile apparatus as a whole.

Moreover, in the case of formation of an image presented by image data acquired via a communication line onto a recording sheet, there is a case where the quality of the image presented by the image data sent from the sender is low due to problems of a transmission speed, the amount of transmitted data and so on. In such a case, by using the common frame, it is possible to form the image presented by the image data sent from the sender of required image quality, as well as it is possible to downsize and form at a low cost.

## Claims

1. An image forming apparatus that forms an image on a recording sheet by moving a movable recording unit in a crossing direction crossing a direction of conveyance of the recording sheet while conveying the recording sheet, and that reads an image formed on an original sheet by a reading unit while conveying the original sheet,
the image forming apparatus comprising:
a common frame that includes a recording component supporting frame portion that supports a recording component for recording an image on a recording sheet, and a reading component that supports a reading component for reading an image formed on an original sheet,
wherein the common frame is realized by integral molding with resin.

2. The image forming apparatus of claim 1, wherein the common frame has a pair of side wall portions formed on both sides in the crossing direction, and a plurality of connecting portions that connect the pair of side wall portions and extend in the crossing direction, and
the connecting portion includes a sheet guide that guides at least one of a recording sheet and an original sheet at the time of conveyance of a sheet.

3. The image forming apparatus of claim 1 or 2, further comprising:
recording sheet conveying means for conveying a recording sheet;
a recording sheet conveying driving source for conveying a recording sheet;
a recording sheet transmission mechanism that transmits power from the recording sheet conveying driving source to the recording sheet conveying means;
original sheet conveying means for conveying an original sheet;
an original sheet conveying driving source for conveying an original sheet; and
an original sheet transmission mechanism that transmits power from the original sheet conveying driving source to the original sheet conveying means,
wherein the recording sheet conveying means, the recording sheet conveying driving source, the recording sheet transmission mechanism, the original sheet conveying means, the original sheet conveying driving source and the original sheet transmission mechanism are supported by the common frame.

4. The image forming apparatus of claim 3, wherein the recording sheet conveying driving source and the original sheet conveying driving source are realized by a single common sheet conveying driving source.

5. The image forming apparatus of claim 4, wherein a torque necessary for the common sheet conveying driving source is set so as to become as small as possible while the required accuracy of conveyance is maintained.

6. The image forming apparatus of claim 4 or 5, further comprising switching means for, in one of recording sheet conveyance state and original sheet conveyance state, preventing transmission of power to the conveying means used for the other sheet conveyance.

7. The image forming apparatus of claim 6, wherein the switching means operates in connection with displacement and movement of the movable recording unit.

8. The image forming apparatus of claim 7, wherein the switching means prevents transmission of power to the original sheet conveying means from the common sheet conveying driving source when the movable recording unit has moved to an image forming position to perform image formation, and allows transmission of power to the original sheet conveying means from the common sheet conveying driving source when the movable recording unit has moved to a standby position to stand by when image formation is not performed.

9. The image forming apparatus of claim 8, wherein the original sheet transmitting means includes a sun gear rotated by power given from the common sheet conveying driving source, a planet gear formed so as to mesh with the sun gear and make an angular displacement in a perimeter direction of the sun gear, and a revolving arm member that supports the planet gear so as to make an angular displacement in the perimeter direction of the sun gear,
the original sheet conveying means includes a meshing gear capable of meshing with the planet gear having been displaced to a predetermined meshing position, and an original sheet conveying roller that rotates in accordance with rotation of the meshing gear and conveys an original sheet, and
the switching means has a switching member that, when the movable recording unit has moved to the standby position, is displaced by the movable recording unit to displace the planet gear to the meshing position, and that, when the movable recording unit has moved to a not standby position, is displaced by the movable recording unit to displace the planet gear to a not meshing position.

10. The image forming apparatus of any one of claims 1 to 9, further comprising two or more metal guiding bodies that extend from the one side wall portion to the other side wall portion of the common frame and guide the movable recording unit in the crossing direction.

11. The image forming apparatus of any one of claims 1 to 10, wherein the image forming apparatus is a facsimile apparatus.
